# EUROPEAN PATENT APPLICATION

(11) **EP 4 171 123 A1**
(43) Date of publication of application: **26.04.2023**
(21) Application number: 21842492.7
(22) Date of filing: 06.07.2021
(51) Int. Cl.: H04W 36/00, H04W 36/22, H04W 40/24, H04W 76/11

(54) **MULTI-ACCESS CONNECTION ESTABLISHMENT METHOD, APPARATUS AND SYSTEM**

(30) Priority: 15.07.2020 CN 202010682088
(71) Applicant: Huawei Technologies Co., Ltd., Longgang District, Shenzhen, Guangdong 518129 (CN)
(72) Inventor: YU, Youyang, Shenzhen, Guangdong 518129 (CN)
(74) Representative: Huawei European IPR
(86) International application number: PCT/CN2021/104678
(87) International publication number: WO 2022/012370

(57) **Abstract**

Embodiments of this application provide a multi-access connectivity establishment method. The method includes: determining, based on a terminal identifier of a terminal device, a first connection that is of the terminal device and that is associated with a first access technology; and establishing, for the first connection, a user plane resource associated with a second access technology, so that the terminal device that does not support NAS transfer on a first access technology side can steer a data packet of multi-access connectivity by using the first access technology and the second access technology, so that transmission bandwidth is increased for the terminal device and service continuity during handover is improved.

## Description

This application claims priority to Chinese Patent Application No. 202010682088.5, filed with the China National Intellectual Property Administration on July 15, 2020 and entitled "MULTI-ACCESS CONNECTIVITY ESTABLISHMENT METHOD, APPARATUS, AND SYSTEM", which is incorporated herein by reference in its entirety.

### TECHNICAL FIELD

This application relates to the field of communication technologies, and in particular, to a multi-access connectivity establishment method, an apparatus, and a system.

### BACKGROUND

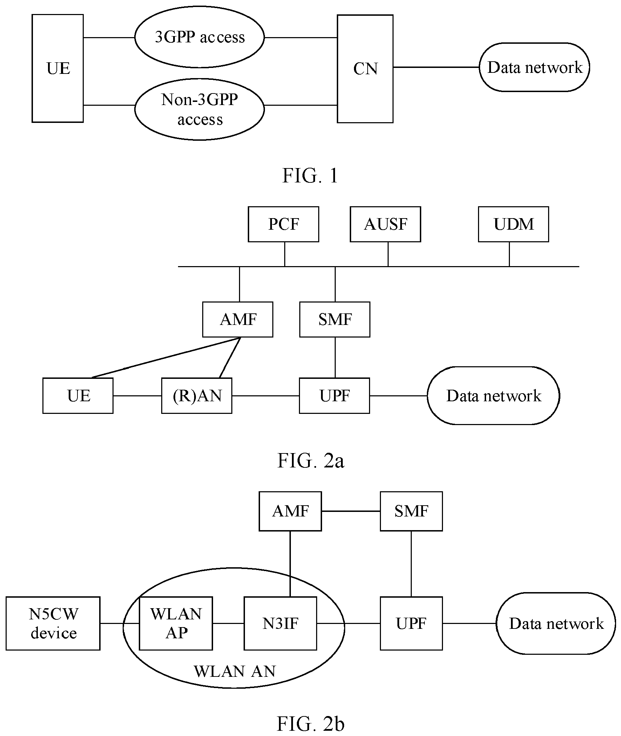

The 3rd generation partnership project (3rd generation partnership project, 3GPP) standard group released an architecture of a 5th generation mobile communication technology (fifth-generation, 5G) network. In the architecture of the 5G network, a terminal device (User Equipment, UE) can send non-access stratum (Non-Access Stratum, NAS) signaling to a core network (Core Network, CN) by using a 3GPP access network, to request to establish a protocol data unit session (Protocol Data Unit Session, PDU Session); or the UE can send NAS signaling to the core network by using a non-3GPP access network, to request to establish a PDU session. The 3GPP access network includes LTE, NR, and the like. The non-3GPP access network includes a WLAN, a fixed network, and the like. In the architecture of the 5G network, the UE can further access the core network by using both a 3GPP access technology and a non-3GPP access technology. The UE may request the 5G network to establish a multi-access PDU session (Multi-Access PDU Session, MA PDU Session). As shown in FIG. 1, a multi-access PDU session includes one 3GPP connection and one non-3GPP connection between UE and a core network. The multi-access PDU session provides a connection between the UE and a data network (Data Network, DN). A carried service flow may be transmitted by using the 3GPP connection, transmitted by using the non-3GPP connection, or transmitted by using both the 3GPP connection and the non-3GPP connection. Use of the multi-access PDU session can increase transmission bandwidth and improve service continuity during handover.

The 5G network supports a non-5G-capable over WLAN (Non-5G-Capable over WLAN, N5CW) device in accessing the core network. Non-5G-capable over WLAN means that NAS signaling cannot be exchanged with the core network by using a WLAN. In other words, the N5CW device does not support exchanging NAS signaling with the core network by using the WLAN. For a 3GPP side, the N5CW device can exchange NAS signaling with the core network by using the 3GPP access network. The 5G network cannot successfully establish a multi-access PDU session for the N5CW device to steer data.

### SUMMARY

Embodiments of this application are used to provide a multi-access connectivity establishment method, an apparatus, and a system, to steer, by using a non-3GPP access network and a 3GPP access network, a data packet of a device that does not support exchanging NAS signaling with a core network by using the non-3GPP access network, so that transmission bandwidth is increased and service continuity during handover is improved.

To achieve the foregoing objective, embodiments of this application provide the following solutions.

According to a first aspect, an embodiment of this application provides a multi-access connectivity establishment method. The method includes: determining, based on a terminal identifier of a terminal device, a first connection that is of the terminal device and that is associated with a first access technology; and establishing a user plane resource associated with a second access technology for the first connection.

According to the multi-access connectivity establishment method provided in the first aspect, the first connection that is of the terminal device and that is associated with the first access technology is determined by using the identifier of the terminal device, and the user plane resource that is of the first connection and that is associated with the second access technology is established, to increase transmission bandwidth for the terminal device and improve service continuity during handover.

In a possible implementation, the method further includes: the establishing a user plane resource associated with a second access technology for the first connection includes: obtaining a first tunnel endpoint identifier of a user plane network element of the first connection; and sending the first tunnel endpoint identifier to an access network element using the second access technology.

According to the multi-access connectivity establishment method provided in this possible implementation, the first tunnel endpoint identifier of the user plane network element of the first connection is sent to the access network element using the second access technology, to establish an uplink user plane resource associated with the first connection and the second access technology, so that the transmission bandwidth is increased for the terminal device, and the service continuity during the handover is improved.

In a possible implementation, the method further includes: the establishing a user plane resource associated with a second access technology for the first connection further includes: configuring an uplink routing rule for the terminal device, where the uplink routing rule indicates to steer an uplink data packet of the first connection by using the first access technology and the second access technology.

In a possible implementation, the method further includes: generating the uplink routing rule according to a routing rule, where the routing rule indicates to steer a data packet of the first connection by using the first access technology and the second access technology.

According to the multi-access connectivity establishment method provided in this possible implementation, the uplink routing rule is configured to enable steering of the uplink data packet of the first connection by using the first access technology and the second access technology, so as to increase the transmission bandwidth for the terminal device and improve the service continuity during the handover.

In a possible implementation, the method further includes: the obtaining a first tunnel endpoint identifier of a user plane network element of the first connection includes: receiving the first tunnel endpoint identifier from a session management network element serving the first connection.

In a possible implementation, the method further includes: the obtaining a first tunnel endpoint identifier of a user plane network element of the first connection includes: obtaining the first tunnel endpoint identifier from the user plane network element.

In a possible implementation, the method further includes: the establishing a user plane resource associated with a second access technology for the first connection includes: obtaining a second tunnel endpoint identifier of the access network element using the second access technology; and sending the second tunnel endpoint identifier to the user plane network element of the first connection.

According to the multi-access connectivity establishment method provided in this possible implementation, the first tunnel endpoint identifier of the user plane network element of the first connection is sent to the access network element using the second access technology, to establish a downlink user plane resource associated with the first connection and the second access technology, so that the transmission bandwidth is increased for the terminal device, and the service continuity during the handover is improved.

In a possible implementation, the method further includes: the establishing a user plane resource associated with a second access technology for the first connection further includes: configuring a downlink routing rule, where the downlink routing rule indicates to steer a downlink data packet of the first connection by using the first access technology and the second access technology.

In a possible implementation, the method further includes: generating the downlink routing rule according to the routing rule, where the routing rule indicates to steer the downlink data packet of the first connection by using the first access technology and the second access technology.

According to the multi-access connectivity establishment method provided in this possible implementation, the downlink routing rule is configured to enable steering of the downlink data packet of the first connection by using the first access technology and the second access technology, so as to increase the transmission bandwidth for the terminal device and improve the service continuity during the handover.

In a possible implementation, the method further includes: the sending the second tunnel endpoint identifier to the user plane network element of the first connection includes: sending the second tunnel endpoint identifier to the user plane network element by using the session management network element serving the first connection.

In a possible implementation, the method further includes: the configuring a downlink routing rule includes: sending a first message to the session management network element serving the first connection, where the first message enables the session management network element to send the downlink routing rule to the user plane network element.

In a possible implementation, the method further includes: the configuring a downlink routing rule includes: sending the downlink routing rule to the user plane network element.

In a possible implementation, the method further includes: receiving the routing rule from a policy control network element serving the first connection.

In a possible implementation, the method further includes: sending a second indication to the session management network element, where the second indication indicates the session management network element to send a NAS message to the terminal device by using an access network using the second access technology.

According to the multi-access connectivity establishment method provided in this possible implementation, the session management network element is indicated to send the NAS message to the terminal device by using the access network using the second access technology, so as to increase transmission bandwidth for a device that does not support exchanging the NAS message with a core network by using the first access technology, and improve the service continuity during the handover.

In a possible implementation, the method further includes: receiving first information from the terminal device; and the determining, based on a terminal identifier of a terminal device, a first connection that is of the terminal device and that is associated with a first access technology includes: in response to the first information, determining the first connection based on the terminal identifier.

According to the multi-access connectivity establishment method provided in this possible implementation, the first information from the terminal device is received, the first connection is determined based on the terminal identifier, and the user plane resource that is of the first connection and that is associated with the second access technology is established for the terminal device, so as to increase the transmission bandwidth and improve the service continuity during the handover.

In a possible implementation, the method further includes: the first information is the terminal identifier

In a possible implementation, the method further includes: the first information is information indicating that the terminal device does not support a non-access stratum NAS on a first access technology side.

In a possible implementation, the method further includes: receiving the terminal identifier from the terminal device.

In a possible implementation, the method further includes: the receiving the terminal identifier from the terminal device and the receiving first information from the terminal device include: receiving a NAS message from the terminal device, where the NAS message includes the terminal identifier.

According to a second aspect, an embodiment of this application provides a multi-access connectivity establishment method. The method includes: sending first information to a core network, where the first information enables the core network to determine, based on a terminal identifier of a terminal device, a first connection that is of the terminal device and that is associated with a first access technology, and establishing, for the first connection, a user plane resource associated with a second access technology.

According to the multi-access connectivity establishment method provided in the second aspect, the first information is sent to the core network, so that the core network determines, based on the terminal identifier of the terminal device, the first connection that is of the terminal device and that is associated with the first access technology, and establishes, for the first connection, the user plane resource associated with the second access technology, to increase transmission bandwidth and improve service continuity during handover.

In a possible implementation, the method further includes: the first information includes the terminal identifier.

In a possible implementation, the method further includes: the first information includes: information indicating that the terminal device does not support a non-access stratum NAS on a first access technology side.

In a possible implementation, the method further includes: sending the terminal identifier to the core network.

In a possible implementation, the method further includes: the sending the terminal identifier to the core network and the sending first information to a core network include: sending a NAS message to the core network, where the NAS message includes the terminal identifier.

In a possible implementation, the method further includes: receiving an uplink routing rule from the core network, where the uplink routing rule indicates to steer an uplink data packet of the first connection by using the first access technology and the second access technology.

According to the multi-access connectivity establishment method provided in this possible implementation, the uplink routing rule is received, and the uplink data packet of the first connection is steered according to the uplink routing rule by using the first access technology and the second access technology, so as to increase the transmission bandwidth and improve the service continuity during the handover.

In a possible implementation, the method further includes: receiving a connection identifier of the first connection from the core network.

According to a third aspect, an embodiment of this application provides a multi-access connectivity establishment method. The method includes: determining, based on a terminal identifier of a terminal device, a first connection that is of the terminal device and that is associated with a first access technology; and establishing a second connection associated with a second access technology, where a data network of the second connection is the same as a data network of the first connection, an IP address of the second connection is the same as an IP address of the first connection, and a user plane network element of the second connection is the same as a user plane network element of the first connection.

According to the multi-access connectivity establishment method provided in the third aspect, the first connection that is of the terminal device and that is associated with the first access technology is determined by using the identifier of the terminal device, the second connection that is associated with the second access technology and that has the data network, IP address, and user plane network element the same as those of the first connection is established, to increase transmission bandwidth for the terminal device by using the first connection and the second connection, and improve service continuity during handover.

In a possible implementation, the method further includes: the establishing a second connection associated with a second access technology includes: obtaining a first tunnel endpoint identifier of the user plane network element of the second connection; and sending the first tunnel endpoint identifier to an access network element using the second access technology.

According to the multi-access connectivity establishment method provided in this possible implementation, the first tunnel endpoint identifier of the user plane network element of the second connection is sent to the access network element using the second access technology, to establish an uplink user plane resource that is of the second connection and that is associated with the second access technology, so that the transmission bandwidth is increased for the terminal device, and the service continuity during the handover is improved.

In a possible implementation, the method further includes: the establishing a second connection associated with a second access technology further includes: configuring an uplink routing rule for the terminal device, where the uplink routing rule indicates to steer an uplink data packet of the first connection/second connection by using the first access technology and the second access technology.

According to the multi-access connectivity establishment method provided in this possible implementation, the uplink routing rule is configured to enable steering of the uplink data packet of the first connection/second connection by using the first access technology and the second access technology, so as to increase the transmission bandwidth for the terminal device and improve the service continuity during the handover.

In a possible implementation, the method further includes: generating the uplink routing rule according to a routing rule, where the routing rule indicates to steer a data packet of the first connection by using the first access technology and the second access technology.

In a possible implementation, the method further includes: the obtaining a first tunnel endpoint identifier of the user plane network element of the second connection includes: receiving the first tunnel endpoint identifier from a session management network element serving the first connection.

In a possible implementation, the method further includes: the obtaining a first tunnel endpoint identifier of the user plane network element of the second connection includes: obtaining the first tunnel endpoint identifier from the user plane network element.

In a possible implementation, the method further includes: the establishing a second connection associated with a second access technology includes: obtaining a second tunnel endpoint identifier of the access network element using the second access technology; and sending the second tunnel endpoint identifier to the user plane network element of the second connection.

According to the multi-access connectivity establishment method provided in this possible implementation, the first tunnel endpoint identifier of the user plane network element of the first connection is sent to the access network element using the second access technology, to establish the uplink user plane resource that is of the second connection and that is associated with the second access technology, so that the transmission bandwidth is increased for the terminal device, and the service continuity during the handover is improved.

In a possible implementation, the method further includes: the establishing a second connection associated with a second access technology further includes: configuring a downlink routing rule, where the downlink routing rule indicates to steer a downlink data packet of the first connection/second connection by using the first access technology and the second access technology.

According to the multi-access connectivity establishment method provided in this possible implementation, the downlink routing rule is configured to enable steering of the downlink data packet of the first connection/second connection by using the first access technology and the second access technology, so as to increase the transmission bandwidth for the terminal device and improve the service continuity during the handover.

In a possible implementation, the method further includes: the configuring a downlink routing rule includes: sending a first message to the session management network element serving the first connection, where the first message enables the session management network element to send the downlink routing rule to the user plane network element.

In a possible implementation, the method further includes: the sending the second tunnel endpoint identifier to the user plane network element of the second connection includes: sending the second tunnel endpoint identifier to the user plane network element by using the session management network element serving the first connection.

In a possible implementation, the method further includes: the configuring a downlink routing rule includes: sending the downlink routing rule to the user plane network element.

In a possible implementation, the method further includes: generating the downlink routing rule according to the routing rule, where the routing rule indicates to steer the downlink data packet of the first connection by using the first access technology and the second access technology.

In a possible implementation, the method further includes: receiving the routing rule from a policy control network element serving the first connection.

In a possible implementation, the method further includes: sending a second indication to the session management network element, where the second indication indicates the session management network element to send a NAS message to the terminal device by using an access network using the second access technology.

According to the multi-access connectivity establishment method provided in this possible implementation, the session management network element is indicated to send the NAS message to the terminal device by using the access network using the second access technology, so as to increase transmission bandwidth for a device that does not support exchanging the NAS message with a core network by using the first access technology, and improve the service continuity during the handover.

In a possible implementation, the method further includes: sending a connection identifier of the first connection to the session management network element, so that the session management network element obtains the data network of the first connection, the IP address of the first connection, and the user plane network element of the first connection based on the connection identifier, and establishes the second connection based on the data network of the first connection, the IP address of the first connection, and the user plane network element of the first connection.

In a possible implementation, the method further includes: receiving first information from the terminal device; and the determining, based on a terminal identifier of a terminal device, a first connection that is of the terminal device and that is associated with a first access technology includes: in response to the first information, determining the first connection based on the terminal identifier.

According to the multi-access connectivity establishment method provided in this possible implementation, the first information from the terminal device is received, the first connection is determined based on the terminal identifier, and the second connection associated with the second access technology is established for the terminal device, so as to increase the transmission bandwidth and improve the service continuity during the handover.

In a possible implementation, the method further includes: the first information is the terminal identifier

In a possible implementation, the method further includes: the first information is information indicating that the terminal device does not support a non-access stratum NAS on a first access technology side.

In a possible implementation, the method further includes: receiving the terminal identifier from the terminal device.

In a possible implementation, the method further includes: the receiving the terminal identifier from the terminal device and the receiving first information from the terminal device include: receiving a NAS message from the terminal device, where the NAS message includes the terminal identifier and the first information.

In a possible implementation, the method further includes: establishing association information between the first connection and the second connection.

In a possible implementation, the method further includes: modifying quality of service QoS policies of the first connection and the second connection based on the association information.

According to a fourth aspect, an embodiment of this application provides a multi-access connectivity establishment method. The method includes: sending first information to a core network, where the first information enables the core network to determine, based on a terminal identifier of a terminal device, a first connection that is of the terminal device and that is associated with a first access technology; and establishing a second connection associated with a second access technology, where a data network of the second connection is the same as a data network of the first connection, an IP address of the second connection is the same as an IP address of the first connection, and a user plane network element of the second connection is the same as a user plane network element of the first connection.

According to the multi-access connectivity establishment method provided in the fourth aspect, the first information is sent to the core network, so that the core network determines, based on the terminal identifier of the terminal device, the first connection that is of the terminal device and that is associated with the first access technology, the second connection that is associated with the second access technology and that has the data network, IP address, and user plane network element the same as those of the first connection is established, to increase transmission bandwidth by using the first connection and the second connection, and improve service continuity during handover.

In a possible implementation, the method further includes: the first information includes the terminal identifier.

In a possible implementation, the method further includes: the first information includes: information indicating that the terminal device does not support a non-access stratum NAS on a first access technology side.

In a possible implementation, the method further includes: sending the terminal identifier to the core network.

In a possible implementation, the method further includes: the sending the terminal identifier to the core network and the sending first information to a core network include: sending a NAS message to the core network, where the NAS message includes the terminal identifier and the first information.

In a possible implementation, the method further includes: receiving an uplink routing rule from the core network, where the uplink routing rule indicates to steer an uplink data packet of the first connection/second connection by using the first access technology and the second access technology.

According to the multi-access connectivity establishment method provided in this possible implementation, the uplink routing rule is received, and the uplink data packet of the first connection/second connection is steered according to the uplink routing rule by using the first access technology and the second access technology, so as to increase the transmission bandwidth and improve the service continuity during the handover.

In a possible implementation, the method further includes: when the uplink routing rule indicates to send the uplink data packet by using the second access technology, sending the uplink data packet by using the second connection.

In a possible implementation, the method further includes: when the uplink routing rule indicates to send the uplink data packet by using the first access technology, sending the uplink data packet by using the first connection.

In a possible implementation, the method further includes: receiving a connection identifier of the first connection from the core network.

In a possible implementation, the method further includes: establishing association information between the first connection and the second connection.

In a possible implementation, the method further includes: modifying quality of service QoS policies of the first connection and the second connection based on the association information.

According to a fifth aspect, an embodiment of this application provides a multi-access connectivity establishment method. The method includes: receiving a connection identifier of a first connection; and establishing, based on the connection identifier, a second connection associated with a second access technology, where a data network of the second connection is the same as a data network of the first connection, an IP address allocated to the second connection is the same as an IP address allocated to the first connection, and a user plane network element of the second connection is the same as a user plane network element of the first connection.

According to the multi-access connectivity establishment method provided in the fifth aspect, the second connection that is associated with the second access technology and that has the data network, IP address, and user plane network element the same as those of the first connection is established by using the identifier of the first connection, to increase transmission bandwidth for the terminal device by using the first connection and the second connection, and improve service continuity during handover.

In a possible implementation, the method further includes: the establishing, based on the connection identifier, a second connection associated with a second access technology includes: determining the data network of the first connection, the IP address of the first connection, and the user plane network element of the first connection based on the connection identifier; and establishing the second connection based on the data network of the first connection, the IP address of the first connection, and the user plane network element of the first connection.

In a possible implementation, the method further includes: the establishing, based on the connection identifier, a second connection associated with a second access technology includes: receiving a first tunnel endpoint identifier of the user plane network element from the user plane network element of the second connection; and sending the first tunnel endpoint identifier to an access network element using the second access technology.

According to the multi-access connectivity establishment method provided in this possible implementation, the first tunnel endpoint identifier of the user plane network element of the second connection is sent to the access network element using the second access technology, to establish an uplink user plane resource that is of the second connection and that is associated with the second access technology, so that the transmission bandwidth is increased for the terminal device, and the service continuity during the handover is improved.

In a possible implementation, the method further includes: the establishing a second connection associated with a second access technology further includes: sending an uplink routing rule to the terminal device, where the uplink routing rule indicates to steer an uplink data packet of the first connection/second connection by using the first access technology and the second access technology.

According to the multi-access connectivity establishment method provided in this possible implementation, the uplink routing rule is sent to the terminal device, to enable the steering of the uplink data packet of the first connection/second connection by using the first access technology and the second access technology, so as to increase the transmission bandwidth for the terminal device and improve the service continuity during the handover.

In a possible implementation, the method further includes: generating the uplink routing rule according to a routing rule, where the routing rule indicates to steer a data packet of the first connection by using the first access technology and the second access technology.

In a possible implementation, the method further includes: the establishing, based on the connection identifier, a second connection associated with a second access technology includes: obtaining a second tunnel endpoint identifier of the access network element using the second access technology; and sending the second tunnel endpoint identifier to the user plane network element.

According to the multi-access connectivity establishment method provided in this possible implementation, the first tunnel endpoint identifier of the user plane network element of the first connection is sent to the access network element using the second access technology, to establish the uplink user plane resource that is of the second connection and that is associated with the second access technology, so that the transmission bandwidth is increased for the terminal device, and the service continuity during the handover is improved.

In a possible implementation, the method further includes: the establishing, based on the connection identifier, a second connection associated with a second access technology further includes: sending a downlink routing rule to the user plane network element, where the downlink routing rule indicates to steer a downlink data packet of the first connection/second connection by using the first access technology and the second access technology.

According to the multi-access connectivity establishment method provided in this possible implementation, the downlink routing rule is configured to enable the steering of the downlink data packet of the first connection/second connection by using the first access technology and the second access technology, so as to increase the transmission bandwidth for the terminal device and improve the service continuity during the handover.

In a possible implementation, the method further includes: generating the downlink routing rule according to the routing rule, where the routing rule indicates to steer the downlink data packet of the first connection by using the first access technology and the second access technology.

In a possible implementation, the method further includes: receiving the routing rule from a policy control network element serving the first connection.

In a possible implementation, the method further includes: establishing association information between the first connection and the second connection.

In a possible implementation, the method further includes: modifying quality of service QoS policies of the first connection and the second connection based on the association information.

In a possible implementation, the method further includes: receiving a second indication, where the second indication indicates to send a non-access stratum NAS message to the terminal device by using an access network using the second access technology.

In a possible implementation, the method further includes: establishing the first connection for the terminal device.

According to a sixth aspect, an embodiment of this application provides a multi-access connectivity establishment method. The method includes: establishing a first connection associated with a first access technology; and receiving, from a terminal device, a terminal address associated with a second access technology, and using the terminal address as a destination address carried when a data packet of the first connection is sent to the terminal device by using the second access technology.

According to the multi-access connectivity establishment method provided in the sixth aspect, the destination address of the data packet of the first connection associated with the first access technology is set to the terminal address that is of the terminal device and that is associated with the second access technology, and the data packet of the first connection is sent to the terminal device by using the second access technology, so as to increase transmission bandwidth for the terminal device, and improve service continuity during handover.

In a possible implementation, the method further includes: receiving a first data packet of the first connection; and changing a destination address of the first data packet to the terminal address, and sending the first data packet to the terminal device.

In a possible implementation, the method further includes: receiving a downlink routing rule, where the downlink routing rule indicates to steer a downlink data packet of the first connection by using the first access technology and the second access technology.

According to the multi-access connectivity establishment method provided in this possible implementation, the downlink routing rule is configured to enable the steering of the downlink data packet of the first connection by using the first access technology and the second access technology, so as to increase the transmission bandwidth for the terminal device and improve the service continuity during the handover.

In a possible implementation, the method further includes: the changing a destination address of the first data packet to the terminal address, and sending the first data packet to the terminal device includes: when the downlink routing rule indicates that the first data packet is sent by using the second access technology, changing the destination address of the first data packet to information about the terminal address, and sending the first data packet to the terminal device.

In a possible implementation, the method further includes: sending, to the terminal device, a network element address of a user plane network element serving the first connection, where the network element address is a destination address carried in a data packet that is of the first connection and that is sent by the terminal device by using the second access technology.

According to the multi-access connectivity establishment method provided in this possible implementation, the network element address of the user plane network element serving the first connection is sent to the terminal device, the destination address of the data packet of the first connection is set to the network element address, and the data packet is sent to the user plane network element by using the second access technology, so as to increase the transmission bandwidth for the terminal device and improve the service continuity during the handover.

In a possible implementation, the method further includes: receiving a second packet whose destination address is the network element address, changing the destination address of the packet to an address of an application server, and sending the second packet to the application server.

In a possible implementation, the method further includes: receiving the address of the application server from the terminal device.

In a possible implementation, the method further includes: receiving first information sent by the terminal device; and the using the terminal address as a destination address carried when a data packet of the first connection is sent to the terminal device by using the second access technology includes: in response to the first information, using the terminal address as the destination address carried when the data packet of the first connection is sent to the terminal device by using the second access technology.

In a possible implementation, the method further includes: the first information is a terminal identifier; or is information indicating that the terminal device does not support a non-access stratum NAS on a first access technology side.

In a possible implementation, the method further includes: sending the information about the terminal address and the first information to a first core network element.

In a possible implementation, the method further includes: sending the information about the terminal address to the user plane network element of the first connection.

According to a seventh aspect, an embodiment of this application provides a multi-access connectivity establishment method. The method includes: requesting to establish a first connection associated with a first access technology; and sending, to a core network, a terminal address associated with a second access technology, where the terminal address is a destination address carried when a data packet of the first connection is sent to a terminal device by using the second access technology.

According to the multi-access connectivity establishment method provided in the seventh aspect, the terminal address associated with the second access technology is sent to the core network, where the terminal address is the destination address carried when the data packet of the first connection is sent to the terminal device by using the second access technology, and the core network is enabled to send the data packet of the first connection to the terminal device by using the second access technology, so as to increase transmission bandwidth for the terminal device and improving service continuity during handover.

In a possible implementation, the method further includes: receiving a network element address of a user plane network element serving the first connection, where the network element address is a destination address carried in a data packet that is of the first connection and that is sent by the terminal device by using the second access technology.

According to the multi-access connectivity establishment method provided in this possible implementation, the network element address of the user plane network element serving the first connection is received, where the network element address is the destination address carried in the data packet that is of the first connection and that is sent by the terminal device by using the second access technology; and the data packet is sent to the user plane network element by using the second access technology, so as to increase the transmission bandwidth for the terminal device and improve the service continuity during the handover.

In a possible implementation, the method further includes: sending a second data packet to the user plane network element by using an access network using the second access technology, where a destination address of the second data packet is the network element address.

In a possible implementation, the method further includes: obtaining an uplink routing rule, where the uplink routing rule indicates to steer an uplink data packet of the first connection by using the first access technology and the second access technology.

In a possible implementation, the method further includes: the sending a second data packet to the user plane network element by using an access network using the second access technology, where a destination address of the second data packet is the network element address includes: when the uplink routing rule indicates that the second data packet is sent by using the second access technology, setting the destination address of the second data packet to the network element address, and sending the second data packet by using the access network using the second access technology.

In a possible implementation, the method further includes: sending first information to the core network, where the first information uses the terminal address as a destination address carried when a data packet of the first connection is sent to the terminal device by using the second access technology.

According to an eighth aspect, an embodiment of this application provides a communication apparatus, including a processor. The processor is configured to read instructions from a memory and run the instructions, to implement the method according to any one of the first aspect or the possible implementations of the first aspect.

According to a ninth aspect, an embodiment of this application provides a communication apparatus, including a processor. The processor is configured to read instructions from a memory and run the instructions, to implement the method according to any one of the second aspect or the possible implementations of the second aspect.

According to a tenth aspect, an embodiment of this application provides a communication apparatus, including a processor. The processor is configured to read instructions from a memory and run the instructions, to implement the method according to any one of the third aspect or the possible implementations of the third aspect.

According to an eleventh aspect, an embodiment of this application provides a communication apparatus, including a processor. The processor is configured to read instructions from a memory and run the instructions, to implement the method according to any one of the fourth aspect or the possible implementations of the fourth aspect.

According to a twelfth aspect, an embodiment of this application provides a communication apparatus, including a processor. The processor is configured to read instructions from a memory and run the instructions, to implement the method according to any one of the fifth aspect or the possible implementations of the fifth aspect.

According to a thirteenth aspect, an embodiment of this application provides a communication apparatus, including a processor. The processor is configured to read instructions from a memory and run the instructions, to implement the method according to any one of the sixth aspect or the possible implementations of the sixth aspect.

According to a fourteenth aspect, an embodiment of this application provides a communication apparatus, including a processor. The processor is configured to read instructions from a memory and run the instructions, to implement the method according to any one of the seventh aspect or the possible implementations of the seventh aspect.

According to a fifteenth aspect, an embodiment of this application provides a program product, including instructions. When the instructions are run on a communication apparatus, the communication apparatus is enabled to implement the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, the method according to any one of the sixth aspect or the possible implementations of the sixth aspect, or the method according to any one of the seventh aspect or the possible implementations of the seventh aspect.

According to a sixteenth aspect, an embodiment of this application provides a computer-readable storage medium. The computer-readable storage medium stores instructions. When the instructions are run on a computer, the computer is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, the method according to any one of the sixth aspect or the possible implementations of the sixth aspect, or the method according to any one of the seventh aspect or the possible implementations of the seventh aspect.

According to a seventeenth aspect, a communication system is provided. The communication system includes one or more communication apparatuses according to the eighth aspect, the tenth aspect, the twelfth aspect, and the thirteenth aspect.

### BRIEF DESCRIPTION OF DRAWINGS

FIG. 1 is a schematic diagram of a multi-access PDU session;
FIG. 2a is a schematic diagram of a 5G network architecture defined by 3GPP;
FIG. 2b is a schematic diagram of an architecture that is defined by 3GPP and in which an N5CW device accesses a core network by using a WLAN;
FIG. 3 is a schematic diagram of a multi-access connectivity establishment architecture according to an embodiment of this application;
FIG. 4 is a schematic diagram of another multi-access connectivity establishment architecture according to an embodiment of this application;
FIG. 5A and FIG. 5B are a schematic flowchart of a multi-access connectivity establishment method according to an embodiment of this application;
FIG. 6A and FIG. 6B are a schematic flowchart of a multi-access connectivity establishment method according to an embodiment of this application;
FIG. 7A and FIG. 7B are a schematic flowchart of a multi-access connectivity establishment method according to an embodiment of this application;
FIG. 8 is a schematic diagram of a communication apparatus according to an embodiment of this application;
FIG. 9 is a schematic diagram of a terminal device according to an embodiment of this application; and
FIG. 10 is a schematic diagram of another communication apparatus according to an embodiment of this application.

### DESCRIPTION OF EMBODIMENTS

The following describes the solutions in embodiments of this application with reference to the accompanying drawings. The following embodiments are described by using a 5G network as an example. It should be noted that the technical solutions in this application may be further applicable to an evolved 4G network, a future 6G network, or the like.

The 3GPP standard group formulates a next-generation mobile communication network architecture (Next Generation System), referred to as a 5G network architecture, as shown in FIG. 2a. In FIG. 2a, UE (User Equipment, user equipment) may access a core network by using a 3GPP access network, a non-3GPP access network, or both a 3GPP access network and a non-3GPP access network. An N3GF (Non-3GPP Gateway Function) provides an access gateway function for the UE to access the core network from the non-3GPP access network. The N3GF may be a TNGF (Trusted Non-3GPP Gateway Function) of a trusted non-3GPP access network, an N3IWF (Non-3GPP InterWorking Function) of an untrusted non-3GPP access network, or a WAGF (Wireline Access Gateway Function) of a fixed access network. The core network may include a control plane function network element and a user plane function network element. The control plane function network element includes an access and mobility management function (Access and Mobility Management Function, AMF), a session management function (Session Management Function, SMF), an authentication server function (Authentication Server Function, AUSF), a unified data management (Unified Data Management, UDM), or a policy control function (Policy Control function, PCF). The AMF is mainly responsible for registration authentication during user access and user mobility management. The SMF is mainly responsible for establishing a corresponding session connection on a network side when a user initiates a service, providing a specific service for the user, and delivering a data packet forwarding policy, a QoS control policy, and the like to the user plane function network element. The AUSF is mainly responsible for authenticating user equipment, to determine authority of the user equipment. The UDM is mainly configured to store user equipment subscription data. The PCF is mainly configured to deliver a service-related policy to the AMF or the SMF. The user plane function network element is mainly a user plane function (User Plane Function, UPF), and is mainly responsible for packet data packet forwarding, quality of service (Quality of Service, QoS) control, charging information statistics collection, and the like.

To distinguish from an N5CW device, in this application, the UE is a device that supports exchanging NAS signaling with a core network on both a 3GPP side and a non-3GPP side. Therefore, when UE can access a 5G core network by using 3GPP and non-3GPP networks, the UE supports establishment of a NAS signaling connection to the AMF by using the 3GPP access network, and also supports establishment of a NAS signaling connection to the AMF by using the non-3GPP access network. Comparatively, the N5CW device does not have a 5G capability on the non-3GPP side, to be specific, does not support establishment of a NAS signaling connection to the AMF by using the non-3GPP access network.

FIG. 2b is an architecture in which an N5CW device accesses a core network by using a WLAN. When the N5CW device accesses the core network from the WLAN, a non-3GPP interworking function (Non-3GPP Interworking Function, N3IF) establishes a PDU session for the N5CW device. The PDU session may be established based on a PDU session parameter configured on the N3IF. The configured PDU session parameter is common to all N5CW devices connected to the N3IF. The PDU session may alternatively be established based on a default PDU session parameter in subscription data of the N5CW device. The PDU session parameter includes at least one of a data network name (Data Network Name, DNN), network slice selection assistance information (Network Slice Selection Assistance Information, NSSAI), a session and service continuity mode (Session and Service Continuity Mode, SSC mode), and a PDU session type. In the foregoing two manners, for a same N5CW device, an interface between the N5CW device and an N3IF does not support a plurality of PDU sessions. Therefore, each N5CW device can establish only one PDU session by using a non-3GPP access network.

Generally, UE establishes a multi-access PDU session in the following three possible manners:
(1) The UE requests, by using a 3GPP access network, to establish the multi-access PDU session. In this case, a network is triggered to send a request to an N3GF, where the request is used to establish a resource of the multi-access PDU session on a non-3GPP side for the UE.

When an N5CW device establishes a multi-access PDU session in this manner, because based on the foregoing descriptions, when the N5CW registers with the core network on the non-3GPP side, one PDU session has been established, and because an interface between an N3IF and the N5CW device does not support establishment of a multi-access PDU session, the N3IF cannot establish a corresponding resource for the N5CW device on a WLAN side. In this case, the request fails.

(2) The UE requests to establish a multi-access PDU session by using a non-3GPP access network.

After the multi-access PDU session is established, the UE determines, according to a multi-access routing rule sent by a network, to transmit an uplink data packet of a service flow by using a 3GPP access network, the non-3GPP access network, or both the 3GPP access network and the non-3GPP access network. Because the N5CW device does not support exchanging NAS signaling with the core network by using the non-3GPP access network, the N5CW device cannot receive the multi-access routing rule delivered by the core network. Therefore, a service flow cannot be steered between two access networks based on a network decision.

(3) The UE requests, by using a non-3GPP access network, to establish a multi-access PDU session including only a non-3GPP-side resource, and then requests, by using a 3GPP access network, to add a 3GPP side resource to the multi-access PDU session.

Because an N5CW device does not support exchanging NAS signaling with a core network by using the non-3GPP access network, and when an N3IF establishes a PDU session for the N5CW device on a non-3GPP side, the N5CW device cannot perceive existence of the PDU session, and cannot learn of an identifier of the PDU session. Therefore, the N5CW device cannot request, by using the 3GPP access network, to add a 3GPP side resource for the PDU session.

Therefore, the N5CW terminal cannot establish a multi-access PDU session in the foregoing three manners. Consequently, transmission bandwidth cannot be increased, and service continuity during handover cannot be improved.

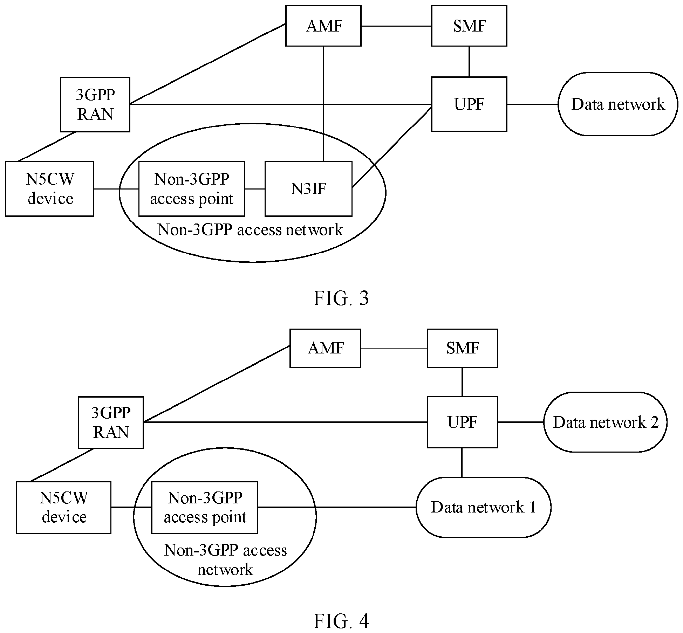

To increase transmission bandwidth for an N5CW device and improve service continuity during handover, this embodiment proposes the following two architectures in which an N5CW device establishes multi-access connectivity, as shown in FIG. 3 and FIG. 4.

The architecture shown in FIG. 3 includes a 3GPP RAN, a non-3GPP access network, an AMF, an SMF, a UPF, and a DN. For ease of description, other network elements are not shown. For the 3GPP RAN, an N3IF, the AMF, the SMF, the UPF, and the DN, refer to the descriptions of FIG. 2a and FIG. 2b. When an N5CW device accesses a core network from the non-3GPP access network, the N3IF generates NAS signaling: a registration request, to complete a registration procedure of the N5CW device. Then, the N3IF generates NAS signaling: a PDU session establishment request, to complete a PDU session establishment procedure of the N5CW device on a non-3GPP side. In the PDU session establishment procedure, the N5CW device obtains an IP address 1. The N5CW device requests, by using a 3GPP access network, to establish multi-access connectivity. In a multi-access connectivity establishment process, the N5CW device obtains the IP address 1. The N5CW device sends an uplink data packet of the multi-access connectivity based on the IP address 1 by using the 3GPP or non-3GPP access network, to communicate with the DN. When receiving a downlink data packet from the DN, the UPF determines, based on a destination address, namely, the IP address 1, in the downlink data packet, that the downlink data packet is a data packet of the multi-access connectivity, and the UPF sends the downlink data packet to the N5CW device by using the 3GPP or non-3GPP access network.

The architecture shown in FIG. 4 includes a 3GPP RAN, a non-3GPP access network, an AMF, an SMF, a UPF, and a DN. For the 3GPP RAN, the AMF, the SMF, the UPF, and the DN, refer to the descriptions of FIG. 2a and FIG. 2b. When an N5CW device accesses a core network from the non-3GPP access network, the non-3GPP access network allocates an IP address 1 to the N5CW device. Multi-access connectivity of the N5CW device includes a connection between a 3GPP access network and the UPF and a connection between the non-3GPP access network and the UPF. When requesting to establish a first connection associated with a 3GPP access technology, the N5CW device obtains an IP address 2 allocated to the N5CW device. The N5CW device obtains an IP address 3 of the UPF from the 3GPP access network. The N5CW device sends a data packet to the UPF by using the IP address 1 through the non-3GPP access network, where a destination address of the data packet is the IP address 3. The N5CW device sends a data packet to the UPF by using the IP address 2 through the 3GPP access network. After receiving an uplink data packet from the non-3GPP access network, the UPF replaces the source IP address 1 in the uplink data packet with the IP address 2, and then sends the uplink data packet to a DN 2. A data packet sent by the N5CW device by using the non-3GPP access network may be sent to the UPF by using a DN 1. The DN 1 and the DN 2 may be a same DN, or may be different DNs. After receiving an uplink data packet from the 3GPP access network, the UPF sends the uplink data packet to the DN. The data packet is sent when it is ensured that a source IP address of the data packet is the IP address 2. To ensure that the source IP address of the data packet is the IP address 2, the UPF may replace the source IP address of the data packet with the IP address 2, or confirm that the source IP address of the data packet is the IP address 2. After receiving a downlink data packet whose destination address is the IP address 2, the UPF may send the data packet to the N5CW device by using the non-3GPP access network or the 3GPP access network. If the UPF is to send the data packet by using the non-3GPP access network, the UPF replaces the destination address in the data packet with the IP address 1, replaces a source address in the data packet with the IP address 3, and then sends the data packet. If the UPF is to send the data packet by using the 3GPP access network, the UPF ensures that the destination address in the data packet is the IP address 2. To ensure that the destination IP address of the data packet is the IP address 2, the UPF may replace the destination IP address of the data packet with the IP address 2, or confirm that the destination IP address of the data packet is the IP address 2.

In the architectures shown in FIG. 3 and FIG. 4, the multi-access connectivity is connections between the N5CW device and the DN, including a 3GPP-side connection and a non-3GPP-side connection. The N5CW device and the DN may transmit a data packet by using the 3GPP-side connection, the non-3GPP-side connection, or both the 3GPP-side connection and the non-3GPP-side connection. In the following embodiments, a multi-access connectivity establishment process is described based on a PDU session establishment process.

With reference to the architecture shown in FIG. 3, the following describes a multi-access connectivity establishment method provided in an embodiment of this application. The method is used to establish multi-access connectivity for a terminal device that does not support exchanging control plane signaling with a core network by using a first access technology. The terminal device requests, by using an access network using a second access technology, to establish the multi-access connectivity. The following uses an example in which the first access technology is a non-3GPP access technology, the second access technology is a 3GPP access technology, the terminal device is an N5CW terminal device, a connection of the terminal device is a PDU session of the terminal device, and a connection identifier is a PDU session ID for description. In this embodiment of this application, a PDU session associated with the non-3GPP access technology is also referred to as a PDU session on a non-3GPP side, a PDU session established by using a non-3GPP access network, or a PDU session established on the non-3GPP side. The control plane signaling may be a NAS message or NAS signaling. It should be noted that the method provided in this embodiment of this application may further be used in a scenario in which both the first access technology and the second access technology are 3GPP access technologies, or both are non-3GPP access technologies. The method provided in this embodiment of this application may further be used to establish multi-access connectivity for a terminal device that supports exchanging control plane signaling with a core network in both the access technologies.

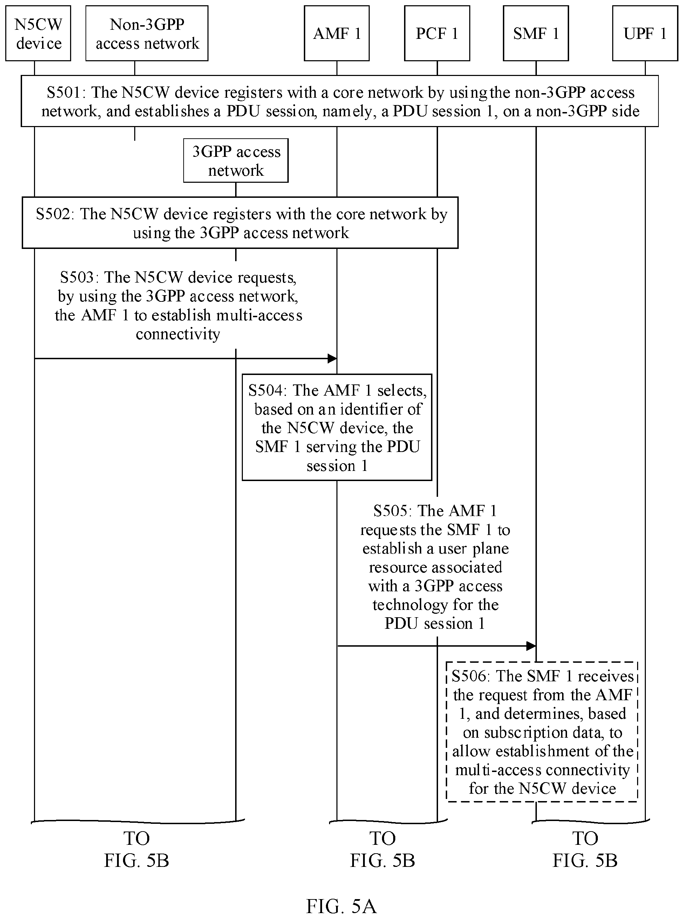

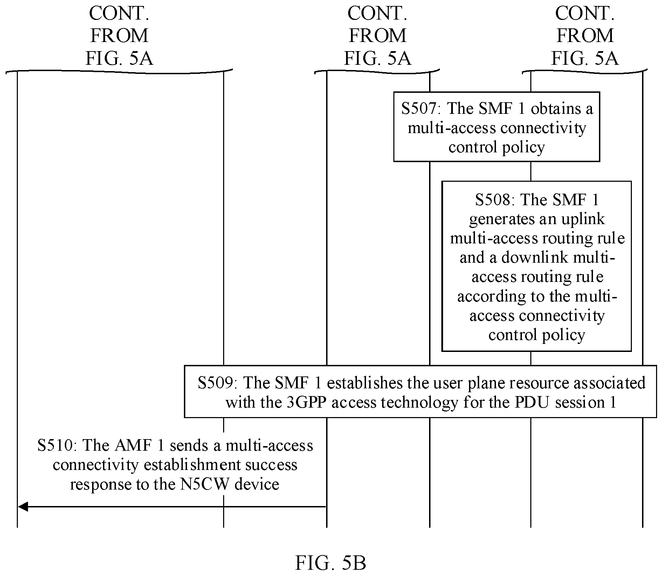

As shown in FIG. 5A and FIG. 5B, the method includes the following steps.

S501: The N5CW device registers with a core network by using the non-3GPP access network, and establishes a PDU session on the non-3GPP side.

In S501, an N3IF establishes a PDU session 1 of the N5CW device on the non-3GPP side. The N5CW device obtains an IP address 1 allocated by the core network to the PDU session. An AMF, an SMF, and a UPF of the PDU session 1 are respectively an AMF 1, an SMF 1, and a UPF 1. Optionally, a PCF of the PDU session 1 is a PCF 1.

S502: The N5CW device registers with the core network by using a 3GPP access network.

In S502, a NAS connection is established between the N5CW device and the AMF 1 by using the 3GPP access network.

For example, according to network planning, the AMF 1 serves the 3GPP access network and the non-3GPP access network, and the N5CW device registers with the AMF 1 by using S501 and S502.

S503: The N5CW device requests, by using the 3GPP access network, the AMF 1 to establish multi-access connectivity.

For example, the N5CW device requests, by using the 3GPP access network, the AMF 1 to establish a user plane resource associated with the 3GPP access technology for the PDU session 1.

The N5CW device requests, by using the NAS connection established in S502, the AMF 1 to establish the multi-access connectivity. Based on the request, the AMF 1 may learn that the multi-access connectivity needs to be established by using the PDU session that is of the N5CW device and that is established on the non-3GPP side. In other words, the AMF 1 may learn that the user plane resource associated with the 3GPP access technology needs to be established for the PDU session on the non-3GPP side. In S501 to S510, the multi-access connectivity is also referred to as the PDU session 1 associated with the 3GPP access technology and the non-3GPP access technology or a first connection associated with the first access technology and the second access technology. In other words, after the user plane resource associated with the 3GPP access technology is established for the PDU session 1 associated with the non-3GPP access technology, the PDU session 1 may be referred to as the multi-access connectivity. After a user plane resource associated with the second access technology is established for a first connection associated with the first access technology, the first connection may be referred to as the multi-access connectivity.

For example, the N5CW device sends, to the AMF 1 by using the NAS connection established in S502, a first NAS message requesting to establish the multi-access connectivity. The AMF 1 may learn, by using the first NAS message, that the multi-access connectivity needs to be established by using the PDU session that is of the N5CW device and that is established on the non-3GPP side. Therefore, the first NAS message may enable or trigger the AMF to obtain, based on a terminal identifier of the N5CW device, information about the PDU session that is of the N5CW device and that is established by using the non-3GPP access network, in other words, obtain the information about the PDU session on the non-3GPP side. The information that is about the PDU session on the non-3GPP side and that is obtained by the AMF is information used to establish the multi-access connectivity. For example, the information that is about the PDU session on the non-3GPP side and that is obtained by the AMF includes an SMF serving the PDU session on the non-3GPP side or an identifier of the PDU session on the non-3GPP side. For example, in response to the first NAS message, the AMF 1 can obtain, based on the terminal identifier of the N5CW device, the SMF 1 serving the PDU session 1, the IP address 1 allocated to the N5CW device for the PDU session 1, or a PDU session ID of the PDU session 1.

In an implementation of the first NAS message, the first NAS message may include the terminal identifier of the N5CW device.

In another implementation of the first NAS message, the first NAS message may include information indicating the terminal identifier of the N5CW device.

In an implementation of the first NAS message, the first NAS message may include a first indication, and the AMF 1 may learn, by using the first indication, that the multi-access connectivity needs to be established by using the PDU session that is of the N5CW device and that is established on the non-3GPP side. In other words, the first indication may enable or trigger the AMF to obtain, based on the terminal identifier of the N5CW device, the information about the PDU session that is of the N5CW device and that is established by using the non-3GPP access network.

For example, the first indication may be implemented in the following manner:
(1) the first indication may be an N5CW device indication, indicating that the current terminal is an N5CW device;
(2) the first indication may be the terminal identifier of the N5CW device;
(3) the first indication may be an indication indicating that the non-3GPP side does not support a NAS message, indicating that the current terminal does not support non-3GPP sending of the NAS message; or
(4) the first indication may be a PDU session ID with a special value; for example, a value of the PDU session ID is null.

In another implementation of the first NAS message, the first NAS message may enable, in an implied manner, the AMF 1 to learn that the multi-access connectivity needs to be established by using the PDU session that is of the N5CW device and that is established on the non-3GPP side. For example, the implied manner is that the first NAS message does not carry some information.

For example, the first NAS message does not carry the PDU session ID. When finding that the first NAS message does not include the PDU session ID, the AMF 1 may learn that the multi-access connectivity needs to be established by using the PDU session that is of the N5CW device and that is established on the non-3GPP side.

For example, the first NAS message may further include a multi-access PDU request indication, and the multi-access PDU request indication indicates to request to establish a multi-access PDU session.

For example, the first NAS message may further include a PDU session establishment request to be sent to the SMF, and the PDU session establishment request to be sent to the SMF requests the SMF 1 serving the PDU session 1 to establish the multi-access connectivity. The PDU session establishment request to be sent to the SMF may include a first indication. The SMF 1 may learn, by using the first indication, that the multi-access connectivity needs to be established by using the PDU session that is of the N5CW device and that is established on the non-3GPP side. In other words, the first indication may enable or trigger the SMF 1 to obtain, based on the terminal identifier of the N5CW device, the information about the PDU session that is of the N5CW device and that is established by using the non-3GPP access network.

Optionally, before S503, the method may further include: The N5CW device determines that the core network registered in S501 and the core network registered in S502 belong to a same PLMN.

In S503, the terminal device requests the core network to determine, based on the terminal identifier of the terminal device, the first connection that is of the terminal device and that is associated with the first access technology. The terminal device may send first information to the core network, so that the core network learns that the first connection that is of the terminal device and that is associated with the first access technology needs to be determined based on the terminal identifier of the terminal device. The first information may be the terminal identifier, or information indicating that the terminal device does not support a non-access stratum NAS on a first access technology side.

In a possible implementation, the terminal device may send a NAS message to the core network, where the NAS message includes the first information and the terminal identifier. A mobility management network element receives the NAS message, and determines, based on the terminal identifier of the terminal device, the first connection that is of the terminal device and that is associated with the first access technology.

In another possible implementation, the terminal device may send a PDU session establishment request to the core network, where the PDU session establishment request includes the first information. A session management network element receives the PDU session establishment request, and determines, based on the terminal identifier of the terminal device, the first connection that is of the terminal device and that is associated with the first access technology.

S504: The AMF 1 selects, based on the terminal identifier of the N5CW device, the SMF 1 serving the PDU session 1.

The AMF 1 selects the SMF 1, to use the SMF 1 as an SMF serving the multi-access connectivity.

After receiving the multi-access connectivity establishment request, the AMF 1 may obtain the terminal identifier of the N5CW device based on the request, and select, by using the terminal identifier of the N5CW device, the SMF 1 serving the PDU session 1.

For example, after receiving the first NAS message, the AMF 1 may obtain the terminal identifier of the N5CW device based on the first NAS message, and select, by using the terminal identifier of the N5CW device, the SMF 1 serving the PDU session 1.

In an implementation of the first NAS message, the first NAS message may include a first indication. The AMF 1 obtains, based on the first indication, the terminal identifier of the N5CW device, and selects, by using the terminal identifier of the N5CW device, the SMF 1 serving the PDU session 1.

For example, that the AMF 1 obtains, based on the first indication, the terminal identifier of the N5CW device, and selects, by using the terminal identifier of the N5CW device, the SMF 1 serving the PDU session 1 may be implemented in the following manners: (1) The first indication is an N5CW device indication. The AMF 1 obtains the terminal identifier of the N5CW device based on the N5CW device indication, and determines the PDU session 1 of the N5CW device on the non-3GPP side. The AMF 1 selects the SMF of the PDU session 1, namely, the SMF 1.

(2) The first indication is the terminal identifier of the N5CW device. The AMF 1 determines, based on the terminal identifier of the N5CW device, that the terminal device is the N5CW device. The AMF 1 determines the PDU session 1 of the N5CW device on the non-3GPP side based on the identifier. The AMF 1 selects the SMF of the PDU session 1, namely, the SMF 1.

(3) The first indication is an indication indicating that the non-3GPP side does not support a NAS message. Based on the indication, the AMF 1 obtains the terminal identifier of the N5CW device, and determines the PDU session 1 of the N5CW device on the non-3GPP side. The AMF 1 selects the SMF of the PDU session 1, namely, the SMF 1.

(4) The first indication may be a PDU session ID with a special value. For example, a value of the PDU session ID is null. The AMF 1 obtains the teriminal identifier of the N5CW device based on the PDU session ID, and determines the PDU session 1 of the N5CW device on the non-3GPP side. The AMF 1 selects the SMF of the PDU session 1, namely, the SMF 1.

(5) The first indication is indicated in an implied manner. For example, the first NAS message does not carry the PDU session ID. When the AMF 1 finds that the first NAS message does not include the PDU session ID, the AMF 1 obtains the terminal identifier of the N5CW device, and determines the PDU session 1 of the N5CW device on the non-3GPP side. The AMF 1 selects the SMF of the PDU session 1, namely, the SMF 1.

S505: The AMF 1 requests the SMF 1 to establish the user plane resource associated with the 3GPP access technology for the PDU session 1.

For example, the AMF sends a request message to the SMF 1, where the request message requests to establish the user plane resource of the PDU session 1 on the 3GPP side.

Optionally, the request message may include the PDU session ID of the PDU session 1. The SMF 1 may learn, by using the PDU session ID of the PDU session 1, that the user plane resource of the PDU session 1 on the 3GPP side needs to be established. Establishing the user plane resource of the PDU session 1 on the 3GPP side includes: establishing the user plane resource of the PDU session 1 on the 3GPP side by using a session parameter of the PDU session 1, where the session parameter of the PDU session 1 includes the UPF serving the PDU session 1, namely, the UPF 1; in other words, the SMF 1 needs to establish the user plane resource of the PDU session 1 on the UPF 1 and in the 3GPP access network. Optionally, the session parameter of the PDU session 1 further includes the IP address that is of the N5CW device and that is allocated to the PDU session 1. In other words, an IP address allocated by the SMF 1 to the multi-access connectivity is the same as the IP address of the PDU session 1. Optionally, the session parameter of the PDU session 1 further includes NSSAI. In other words, the SMF 1 notifies the 3GPP access network to allocate a resource to the multi-access connectivity based on the NSSAI. Optionally, the session parameter of the PDU session 1 further includes the PCF serving the PDU session 1, namely, the PCF 1. In other words, the SMF 1 obtains a multi-access connectivity control policy from the PCF 1.

Optionally, the request message further includes a multi-access PDU request indication. The SMF 1 may learn, by using the multi-access PDU request indication, that the multi-access connectivity needs to be established.

Optionally, the request message further includes a PDU session establishment request to be sent to the SMF. The SMF 1 may learn, by using the PDU session establishment request, that the multi-access connectivity needs to be established by using the PDU session that is of the N5CW device and that is established on the non-3GPP side.

Optionally, the request message may include a second indication. The second indication indicates the SMF 1 to send a NAS message to the N5CW device by using the 3GPP access network. For example, the second indication may be implemented in the following manner:
(1) the second indication may be an N5CW device indication, indicating that the current terminal is an N5CW device;
(2) the second indication may be the terminal identifier of the N5CW device;
(3) the second indication may be an indication indicating that the non-3GPP side does not support a NAS message, indicating that the current terminal does not support non-3GPP sending of the NAS message; or
(4) the second indication may be a PDU session ID with a special value; for example, a value of the PDU session ID is null.

Optionally, in a possible implementation, the AMF 1 generates the second indication based on the first indication in S503.

Optionally, in another possible implementation, the AMF 1 generates the second indication based on subscription of the N5CW device.

Optionally, the SMF receives the second indication, and stores information indicating that the NAS message is to be sent to the N5CW device by using the 3GPP access network.

For example, in a subsequent procedure, when the SMF needs to send a NAS message or a session management parameter to the N5CW device, the SMF chooses, based on the information, to send the NAS message or the session management parameter to the N5CW device from the 3GPP access network. Optionally, the SMF sends, to the AMF, an indication indicating that the NAS message is to be sent from the 3GPP access network to the N5CW device.

Optionally, the AMF stores information indicating that the NAS message is to be sent to the N5CW device by using the 3GPP access network. For example, the AMF stores, based on the first indication, the information indicating that the NAS message is to be sent to the N5CW device by using the 3GPP access network.

For example, in a subsequent procedure, when the AMF needs to send a NAS message to the N5CW device, the SMF chooses, based on the information, to send the NAS message to the N5CW device from the 3GPP access network.

For example, the request message may be an N11 message.

For example, the N11 message may be a session establishment request message or a session modification request message.

S506: The SMF 1 receives the request from the AMF 1, and determines, based on subscription data, to allow establishment of the multi-access connectivity for the N5CW device.

For example, the SMF 1 determines, based on the subscription data, to allow establishment of the user plane resource associated with the 3GPP access technology for the PDU session 1 of the N5CW device.

S506 is optional.

S507: The SMF 1 obtains the multi-access connectivity control policy.

The multi-access connectivity control policy is used to control a service flow carried by the multi-access connectivity to be routed by using the 3GPP access network and the non-3GPP access network.

For example, the multi-access connectivity control policy includes a steering mode. Optionally, the multi-access connectivity control policy includes a steering function.

The steering mode indicates a mode in which the service flow is routed by using the 3GPP access network and the non-3GPP access network. For example, the steering mode may indicate that routing is preferentially performed by using the 3GPP access network, routing is preferentially performed by using the non-3GPP access network, routing is performed by using an access network having a minimum communication delay (Smallest Delay mode), or routing is performed by using both the 3GPP access network and the non-3GPP access network (Load-Balancing mode).

The steering function indicates a function used to route a data packet between the N5CW device and the UPF. For example, the steering function includes the multipath transmission control protocol (MultiPath Transmission Control Protocol, MPTCP) and access traffic steering, switching, and splitting low-layer (Access Traffic Steering, Switching, and Splitting Low-Layer, ATSSS-LL).

For example, for details of the steering mode and the steering function, refer to descriptions of a steering mode and steering functionality in "System architecture for the 5G System (5GS)" in 3GPP TS 23.501.

Optionally, the SMF 1 may obtain the multi-access connectivity control policy from the PCF 1.

Optionally, the SMF 1 may alternatively locally obtain the multi-access connectivity control policy from the SMF 1.

S508: The SMF 1 generates an uplink multi-access routing rule and a downlink multi-access routing rule according to the multi-access connectivity control policy.

The uplink multi-access routing rule is used to guide the N5CW device to steer, switch, and split an uplink data packet between the 3GPP access network and the non-3GPP access network. For example, the multi-access routing rule includes service flow descriptions, a steering mode, and a steering function.

The downlink multi-access routing rule is used to guide the UPF to steer, switch, and split a downlink data packet between the 3GPP access network and the non-3GPP access network. For example, the N4 multi-access routing rule includes service flow descriptions, a steering mode, and a steering function.

The SMF 1 sends the downlink multi-access routing rule to the UPF 1, and sends the uplink multi-access routing rule to the N5CW device.

S509: The SMF 1 establishes the user plane resource associated with the 3GPP access technology for the PDU session 1.

The SMF 1 obtains information about an uplink tunnel address allocated by the UPF 1 serving the PDU session 1 to the PDU session 1 on the 3GPP side. The SMF 1 sends, to the 3GPP access network by using the AMF 1, the information about the uplink tunnel address allocated by the UPF 1 to the PDU session 1 on the 3GPP side.

The SMF 1 obtains information about a downlink tunnel address allocated by the 3GPP access network to the PDU session 1 on the 3GPP side. For example, the 3GPP access network allocates the information about the downlink tunnel address to the PDU session 1 on the 3GPP side, and sends the information about the downlink tunnel address to the SMF 1 by using the AMF 1. The SMF 1 sends the information about the downlink tunnel address of the 3GPP access network to the UPF 1.

For example, the SMF 1 sends an N4 session modification request message to the UPF 1.

The N4 session modification request message includes the downlink multi-access routing rule.

The UPF 1 sends an N4 session modification response message to the SMF. The N4 session modification response message carries an N3 tunnel address of the UPF 1 on the 3GPP side.

For example, the SMF 1 sends an N11 message to the AMF 1. The N11 message is used to transfer the information about the uplink tunnel address of the UPF to the 3GPP access network.

Optionally, the N11 message includes first N2 session management information. The first N2 session management information is used to establish the user plane resource of the PDU session 1 in the 3GPP access network. The N2 session management information carries the N3 tunnel address of the UPF 1 on the 3GPP side in the multi-access connectivity and the session parameter of the PDU session 1, for example, the NSSAI.

Optionally, the N11 message includes a PDU session establishment response. The PDU session establishment response indicates, to the N5CW device, that the multi-access connectivity is successfully established.

Optionally, the PDU session establishment response includes the PDU session ID of the PDU session 1, the uplink multi-access routing rule, and the IP address allocated to the multi-access connectivity. The IP address is the same as the IP address of the PDU session 1. The N5CW device uses the PDU session ID of the PDU session 1 as an identifier of the multi-access connectivity. The N5CW device steers, switches, and splits an uplink data packet between the 3GPP access network and the non-3GPP access network according to the uplink multi-access routing rule.

Optionally, the SMF 1 stores information indicating to perform 3GPP receiving and sending of a NAS message of the PDU session 1. In a possible implementation, the SMF 1 may store, based on information about the second indication in S505, information indicating that a NAS message of the multi-access connectivity is to be sent on the 3GPP side.

Optionally, the SMF 1 modifies an attribute of the PDU session 1 to a multi-access PDU session.

For example, the N11 message may be a session establishment response message or a session modification response message.

The AMF 1 sends, to the 3GPP access network, the first N2 session management information received from the SMF 1. The 3GPP access network sends second N2 session management information to the AMF 1. The second N2 session management information carries information about an N3 tunnel address of the 3GPP access network in the PDU session 1. The AMF 1 sends the second N2 session management information to the SMF 1.

The SMF 1 sends an N4 session modification message to the UPF 1, where the N4 session modification message carries the N3 tunnel address of the 3GPP access network in the PDU session 1. The UPF 1 sends an N4 session modification response message to the SMF 1.

In this embodiment of this application, the tunnel address information may include a tunnel endpoint identifier and an IP address.

In S506 to S509, the session management network element establishes the user plane resource on a second access technology side for the first connection of the terminal device.

The session management network element obtains a first tunnel endpoint identifier from a user plane network element. The first tunnel endpoint identifier is used as an uplink tunnel endpoint identifier of the first connection on the second access technology side. The session management network element sends, by using the mobility management network element, the first tunnel endpoint identifier to an access network device using the second access technology. The access network device using the second access technology allocates a second tunnel endpoint identifier. The second tunnel endpoint identifier is used as a downlink tunnel endpoint identifier of the first connection on the second access technology side. The access network device using the second access technology sends the second tunnel endpoint identifier to the session management network element by using the mobility management network element. The session management network element sends the second tunnel endpoint identifier to the user plane network element.

The session management network element generates a downlink routing rule according to the routing rule obtained in S507, where the routing rule indicates to steer a downlink data packet of the first connection by using the first access technology and the second access technology. As shown in S508, in a possible implementation, the session management network element may receive the routing rule from a policy control network element. In another possible implementation, the session management network element generates the routing rule. In this embodiment of this application, the routing rule is also the multi-access connectivity control policy. An uplink routing rule is also referred to as the uplink multi-access routing rule. The downlink routing rule is also referred to as the downlink multi-access routing rule.

The session management network element sends the downlink routing rule to the user plane network element, where the downlink routing rule indicates to steer a downlink data packet of the first connection by using the first access technology and the second access technology. The session management network element generates the uplink routing rule according to the routing rule, where the uplink routing rule indicates to steer an uplink data packet of the first connection by using the first access technology and the second access technology. The session management network element sends the uplink routing rule to the terminal device.

In S509, the session management network element sends a connection identifier of the first connection and an IP address of the first connection to the terminal device by using the mobility management network element. The terminal device uses the connection identifier as a connection identifier of the multi-access connectivity, and uses the IP address as the IP address of the multi-access connectivity.

S510: The AMF 1 sends a multi-access connectivity establishment success response to the N5CW device.

For example, the AMF 1 sends, to the N5CW device, a response indicating that the user plane resource associated with the 3GPP access technology is successfully established for the PDU session 1.

For example, the AMF 1 sends a second NAS message to the N5CW device. The second NAS message indicates that the multi-access connectivity is successfully established.

For example, the second NAS message includes the PDU session establishment response received in S509.

Optionally, the second NAS message includes the PDU session ID of the PDU session 1, indicating that the multi-access connectivity is successfully established.

Optionally, the AMF 1 modifies the attribute of the PDU session 1 to the multi-access PDU session.

In a possible implementation, the multi-access connectivity establishment success response in S510 and the uplink tunnel address of the UPF 1 sent by the AMF 1 to the 3GPP access network in S509 may be simultaneously sent by the AMF 1 to the 3GPP access network, and sent by the 3GPP access network to the N5CW device.

After receiving the PDU session establishment response, the N5CW device sends a data packet of the multi-access PDU session by using the IP address in the PDU session establishment response. The N5CW device chooses, according to the uplink multi-access routing rule in the PDU session establishment response, to send the data packet of the multi-access PDU session by using the 3GPP access network or the non-3GPP access network.

In S509, the SMF 1 sends the downlink multi-access routing rule to the UPF 1. The UPF 1 steers, switches, and splits a downlink data packet between the 3GPP access network and the non-3GPP access network by using the downlink multi-access routing rule.

For example, when the UPF 1 receives a downlink data packet of the PDU session 1, if the UPF 1 determines, according to the downlink multi-access routing rule, to send the downlink data packet to the N5CW device by using the 3GPP access network, the UPF 1 encapsulates the downlink data packet by using the downlink tunnel address of the 3GPP access network in the PDU session 1, and then sends the downlink data packet to the 3GPP access network.

For example, when the UPF 1 receives a downlink data packet of the PDU session 1, if the UPF 1 determines, according to the downlink multi-access routing rule, to send the downlink data packet to the N5CW device by using the non-3GPP access network, the UPF 1 encapsulates the downlink data packet by using a downlink tunnel address of the non-3GPP access network in the PDU session 1, and then sends the downlink data packet to the non-3GPP access network.

In S504 to S510, the core network establishes, for the first connection that is of the terminal device and that is associated with the first access technology, the user plane resource associated with the second access technology. The core network configures the downlink routing rule for the user plane network element, where the downlink routing rule indicates to steer a downlink data packet of the first connection by using the first access technology and the second access technology. The core network configures the uplink routing rule for the terminal device, where the uplink routing rule indicates to steer an uplink data packet of the first connection by using the first access technology and the second access technology.

In S504, the mobility management network element selects the session management network element serving the first connection.

In S505, the mobility management network element requests the session management network element to establish the user plane resource on the second access technology side for the first connection of the terminal device. In S506 to S509, the session management network element establishes the user plane resource on the second access technology side for the first connection of the terminal device.

In S501 to S510, the N5CW device requests to establish the multi-access connectivity by using the 3GPP access network. The core network determines the PDU session 1 of the N5CW device on the non-3GPP side by using the terminal identifier of the N5CW device, and establishes the user plane resource of the PDU session 1 on the 3GPP side, so that the N5CW device can send an uplink data packet of the PDU session 1 by using the 3GPP and non-3GPP access technologies, the UPF can send a downlink data packet of the PDU session 1 by using the 3GPP and non-3GPP access technologies. Therefore, transmission bandwidth is increased for the N5CW device and service continuity during handover is improved.

In S501 to S510, the terminal device requests the multi-access connectivity by using the second access technology. The core network determines, by using the terminal identifier of the terminal device, the first connection that is of the terminal device and that is associated with the first access technology, and establishes the user plane resource associated with the second access technology for the first connection, so that the terminal device can send an uplink data packet of the first connection by using the first access technology and the second access technology. The UPF can send a downlink data packet of the first connection by using the first access technology and the second access technology. Therefore, transmission bandwidth is increased for the terminal device and service continuity during handover is improved.

It should be noted that, in actual deployment, the mobility management network element and the session management network element may be separately located or co-located. When the mobility management network element and the session management network element are co-located, actions performed by the mobility management network element and the session management network element are performed by a same network element, and a message exchanged between the mobility management network element and the session management network element is an internal operation of the network element.

In actual deployment, the session management network element and the user plane network element may be separately located or co-located. When the session management network element and the user plane network element are co-located, actions performed by the session management network element and the user plane network element are performed by a same network element, and a message exchanged between the session management network element and the user plane network element is an internal operation of the network element.

With reference to the architecture shown in FIG. 3, the following describes another multi-access connectivity establishment method provided in an embodiment of this application. The method is used to establish multi-access connectivity for a terminal device that does not support exchanging control plane signaling with a core network by using a first access technology. The terminal device requests, by using an access network using a second access technology, to establish the multi-access connectivity. The following uses an example in which the first access technology is a non-3GPP access technology, the second access technology is a 3GPP access technology, the terminal device is an N5CW terminal device, a connection of the terminal device is a PDU session of the terminal device, and a connection identifier is a PDU session ID for description. In this embodiment of this application, a PDU session associated with the non-3GPP access technology is also referred to as a PDU session on a non-3GPP side, a PDU session established by using a non-3GPP access network, or a PDU session established on the non-3GPP side. The control plane signaling may be a NAS message or NAS signaling. It should be noted that the method provided in this embodiment of this application may further be used in a scenario in which both the first access technology and the second access technology are 3GPP access technologies, or both are non-3GPP access technologies. The method provided in this embodiment of this application may further be used to establish multi-access connectivity for a terminal device that supports exchanging control plane signaling with a core network in both the access technologies.

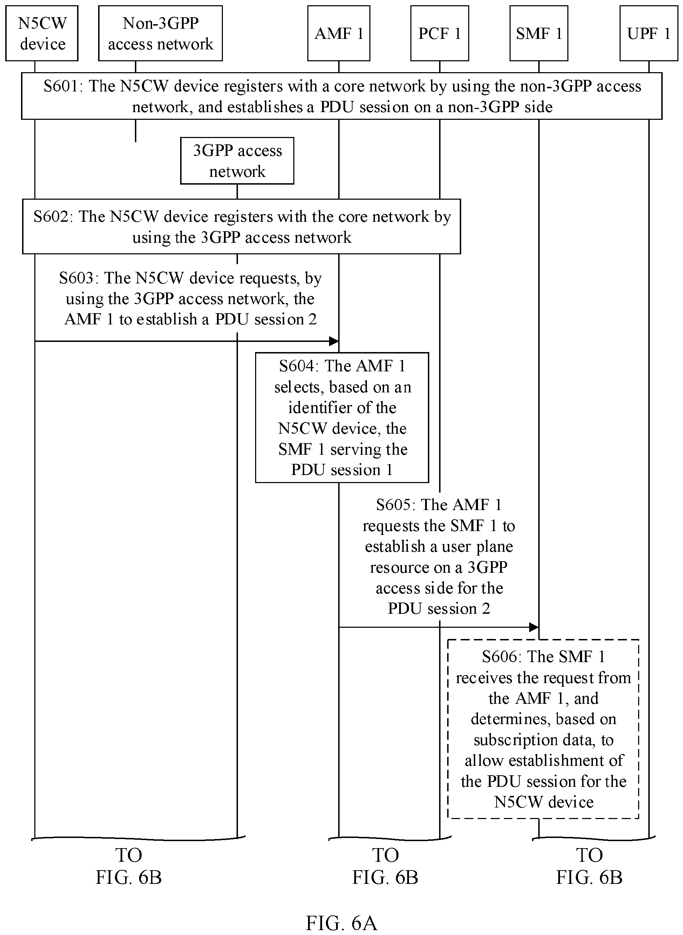

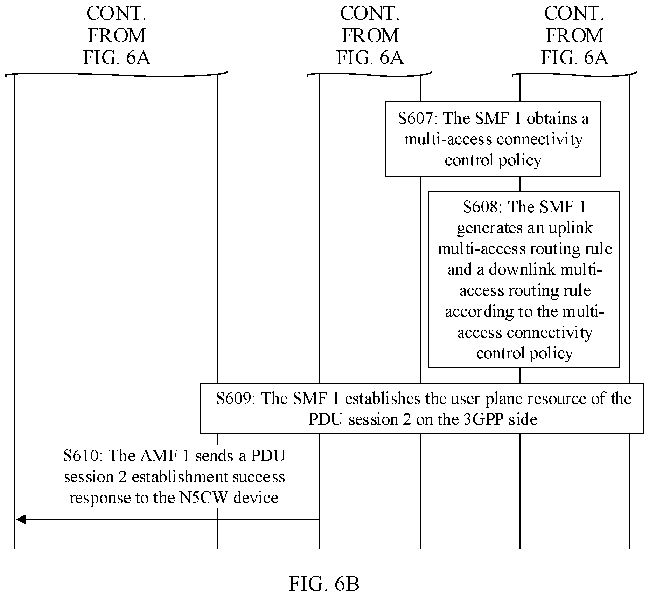

As shown in FIG. 6A and FIG. 6B, the method includes the following steps.

S601: The N5CW device registers with a core network by using the non-3GPP access network, and establishes a PDU session on the non-3GPP side.

For S601, refer to the descriptions of S501.

S602: The N5CW device registers with the core network by using a 3GPP access network.

For S602, refer to the descriptions of S502.

S603: The N5CW device requests, by using the 3GPP access network, an AMF 1 to establish a PDU session 2.

The N5CW device requests, by using a NAS connection established in S602, the AMF 1 to establish the PDU session 2. Based on the request, the AMF 1 may learn that the PDU session 2 needs to be established by using the PDU session that is of the N5CW device and that is established on the non-3GPP side. In other words, the AMF 1 may learn that the PDU session 2 associated with the 3GPP access technology needs to be established.

For example, the N5CW device sends, to the AMF 1 by using the NAS connection established in S602, a first NAS message requesting to establish the PDU session 2. The AMF 1 may learn, by using the first NAS message, that the PDU session 2 needs to be established by using the PDU session that is of the N5CW device and that is established on the non-3GPP side. Therefore, the first NAS message may enable or trigger the AMF to obtain, based on a terminal identifier of the N5CW device, information about the PDU session that is of the N5CW device and that is established by using the non-3GPP access network, in other words, obtain the information about the PDU session on the non-3GPP side. The information that is about the PDU session on the non-3GPP side and that is obtained by the AMF is information used to establish the PDU session 2. For example, the information that is about the PDU session on the non-3GPP side and that is obtained by the AMF includes an SMF serving the PDU session on the non-3GPP side or an identifier of the PDU session on the non-3GPP side. For example, in response to the first NAS message, the AMF 1 can obtain, based on the terminal identifier of the N5CW device, the SMF 1 serving the PDU session 1, the IP address 1 allocated to the N5CW device for the PDU session 1, or the PDU session ID of the PDU session 1.

In an implementation of the first NAS message, the first NAS message may include a first indication, and the AMF 1 may learn, by using the first indication, that the PDU session 2 needs to be established by using the PDU session that is of the N5CW device and that is established on the non-3GPP side. In other words, the first indication may enable or trigger the AMF to obtain, based on the terminal identifier of the N5CW device, the information about the PDU session that is of the N5CW device and that is established by using the non-3GPP access network.

For example, the first indication may be implemented in the following manner:
(1) the first indication may be an N5CW device indication, indicating that the current terminal is an N5CW device;
(2) the first indication may be the terminal identifier of the N5CW device;
(3) the first indication may be an indication indicating that the non-3GPP side does not support a NAS message, indicating that the current terminal does not support non-3GPP sending of the NAS message; or
(4) the first indication may be a PDU session ID with a special value; for example, a value of the PDU session ID is null.

In another implementation of the first NAS message, the first NAS message may enable, in an implied manner, the AMF 1 to learn that the PDU session 2 needs to be established by using the PDU session that is of the N5CW device and that is established on the non-3GPP side. For example, the implied manner is that the first NAS message does not carry some information.

For example, the first NAS message does not carry the PDU session ID. When finding that the first NAS message does not include the PDU session ID, the AMF 1 may learn that the PDU session 2 needs to be established by using the PDU session that is of the N5CW device and that is established on the non-3GPP side.

For example, the first NAS message may further include a multi-access PDU request indication, and the multi-access PDU request indication indicates to request to establish a multi-access PDU session.

For example, the first NAS message may further include a PDU session establishment request to be sent to the SMF, and the PDU session establishment request to be sent to the SMF requests the SMF 1 serving the PDU session 1 to establish the PDU session 2. The PDU session establishment request to be sent to the SMF may include a first indication. The SMF 1 may learn, by using the first indication, that the PDU session 2 needs to be established by using the PDU session that is of the N5CW device and that is established on the non-3GPP side. In other words, the first indication may enable or trigger the SMF 1 to obtain, based on the terminal identifier of the N5CW device, the information about the PDU session that is of the N5CW device and that is established by using the non-3GPP access network.

For example, the first NAS message carries a PDU session ID allocated by the N5CW device to the PDU session 2, which is denoted as a PDU session ID 2 below.

For example, the PDU session establishment request sent by the N5CW device to the SMF carries the PDU session ID 2.

Optionally, before S603, the method may further include: The N5CW device determines that the core network registered in S601 and the core network registered in S602 belong to a same PLMN.

In S603, the terminal device requests the core network to determine, based on the terminal identifier of the terminal device, a first connection that is of the terminal device and that is associated with the first access technology. The terminal device may send first information to the core network, so that the core network learns that the first connection that is of the terminal device and that is associated with the first access technology needs to be determined based on the terminal identifier of the terminal device. The first information may be the terminal identifier, or information indicating that the terminal device does not support a non-access stratum NAS on a first access technology side.

In a possible implementation, the terminal device may send a NAS message to the core network, where the NAS message includes the first information and the terminal identifier. A mobility management network element receives the NAS message, and determines, based on the terminal identifier of the terminal device, the first connection that is of the terminal device and that is associated with the first access technology.

In another possible implementation, the terminal device may send a PDU session establishment request to the core network, where the PDU session establishment request includes the first information. A session management network element receives the PDU session establishment request, and determines, based on the terminal identifier of the terminal device, the first connection that is of the terminal device and that is associated with the first access technology.

S604: The AMF 1 selects, based on the terminal identifier of the N5CW device, the SMF 1 serving the PDU session 1.

For S604, refer to the descriptions of S504.

S605: The AMF 1 requests the SMF 1 to establish a user plane resource of the PDU session 2 on a 3GPP side.

For example, the AMF sends a request message to the SMF 1, where the request message requests to establish the user plane resource of the PDU session 2 on the 3GPP side.

Optionally, the request message may include the PDU session ID 2 and the PDU session ID of the PDU session 1. The PDU session ID 2 indicates an identifier of the PDU session 2 to the SMF 1. The SMF 1 may learn, by using the PDU session ID of the PDU session 1, that a session parameter of the PDU session 1 needs to be used to establish the user plane resource of the PDU session 2 on the 3GPP side. For the session parameter of the PDU session 1, refer to the descriptions of S505.

Optionally, the request message further includes a multi-access PDU request indication, where the multi-access PDU request indication indicates that the SMF 1 may learn that multi-access connectivity needs to be established.

Optionally, the request message further includes a PDU session establishment request to be sent to the SMF. The PDU session establishment request is sent to the SMF, and the SMF 1 may learn that the PDU session 2 needs to be established by using the session parameter of the PDU session that is of the N5CW device and that is established on the non-3GPP side.

Optionally, the request message includes a second indication.

For the second indication, refer to the descriptions of S505.

Optionally, the request message may be an N11 message.

For example, the N11 message may be a session establishment request message or a session modification request message.

S606: The SMF 1 receives the request from the AMF 1, and determines, based on subscription data, to allow establishment of the PDU session 2 for the N5CW device.

S606 is optional.

S607: The SMF 1 obtains a multi-access connectivity control policy. For S607, refer to the descriptions of S507.

S608: The SMF 1 generates an uplink multi-access routing rule and a downlink multi-access routing rule according to the multi-access connectivity control policy. For S608, refer to the descriptions of S508.

S609: The SMF 1 establishes uplink and downlink user plane resources of the PDU session 2 on the 3GPP side.

The SMF 1 obtains information about an uplink tunnel address allocated by the UPF 1 to the PDU session 2 on the 3GPP side. The SMF 1 sends, to the 3GPP access network by using the AMF 1, the information about the uplink tunnel address allocated by the UPF 1 to the PDU session 2 on the 3GPP side.

The SMF 1 obtains information about a downlink tunnel address allocated by the 3GPP access network to the PDU session 2 on the 3GPP side. For example, the 3GPP access network allocates the information about the downlink tunnel address to the PDU session 2 on the 3GPP side, and sends the information about the downlink tunnel address to the SMF 1 by using the AMF 1. The SMF 1 sends the information about the downlink tunnel address of the 3GPP access network to the UPF 1.

The SMF 1 selects the UPF 1 serving the PDU session 1 as a UPF serving the PDU session 2.

For example, the SMF 1 sends an N4 session modification request message to the UPF 1.

The N4 session modification request message includes an N4 multi-access routing rule.

The UPF sends an N4 session modification response message to the SMF. The N4 session modification response message carries an N3 tunnel address of the UPF 1 on the 3GPP side.

For example, when the UPF 1 receives a downlink data packet of the PDU session 2, if the UPF 1 determines, according to the N4 multi-access routing rule, to send the downlink data packet to the N5CW device by using the non-3GPP access network, the UPF 1 encapsulates the downlink data packet by using an N3 tunnel address of the non-3GPP access network in the PDU session 2, and then sends the downlink data packet to the non-3GPP access network.

For example, the SMF 1 sends an N11 message to the AMF 1. The N11 message is used to transfer the information about the uplink tunnel address of the UPF to the 3GPP access network.

Optionally, the N11 message includes first N2 session management information. The first N2 session management information is used to establish the user plane resource of the PDU session 2 in the 3GPP access network. The N2 session management information carries the N3 tunnel address of the UPF 1 on the 3GPP side in the multi-access connectivity and the session parameter of the PDU session 1, for example, NSSAI. In this embodiment of this application, the N3 tunnel address of the UPF 1 on the 3GPP side in the multi-access connectivity is also referred to as an N3 tunnel address of the UPF 1 of the PDU session 2, or an uplink N3 tunnel address of the PDU session 2.

Optionally, the N11 message includes a PDU session establishment response. The PDU session establishment response indicates, to the N5CW device, that the PDU session 2 is successfully established.

Optionally, the PDU session establishment response includes the uplink multi-access routing rule and an IP address allocated to the PDU session 2. The IP address is the same as the IP address of the PDU session 1. The N5CW device steers, switches, and splits an uplink data packet of the PDU session 2 between the 3GPP access network and the non-3GPP access network according to the uplink multi-access routing rule.

Optionally, the SMF 1 stores information indicating to perform 3GPP receiving and sending of a NAS message of the PDU session 2. In a possible implementation, the SMF 1 may store, based on information about the second indication in S605, information indicating that the NAS message of the PDU session 2 is to be sent on the 3GPP side.

The SMF 1 associates the PDU session 1 with the PDU session 2. For example, the SMF 1 establishes an association relationship between the PDU session 1 and the PDU session 2.

In a possible implementation, the SMF 1 stores the PDU session ID of the PDU session 1 in a context of the PDU session 2. Optionally, the SMF 1 marks that the PDU session ID of the PDU session 1 corresponds to the non-3GPP access network, and marks that the PDU session ID 2 corresponds to the 3GPP access network.

In another possible implementation, the SMF 1 stores the PDU session ID 2 in a context of the PDU session 1. Optionally, the SMF 1 marks that the PDU session ID of the PDU session 1 corresponds to the non-3GPP access network, and marks that the PDU session ID 2 corresponds to the 3GPP access network.

The SMF 1 modifies quality of service QoS policies of the PDU session 1 and the PDU session 2 based on the association relationship between the PDU session 1 and the PDU session 2. For example, when modifying the QoS policy of the PDU session 1, the SMF 1 also modifies the QoS policy of the PDU session 2.

For example, the N11 message may be a session establishment response message or a session modification response message.

The AMF 1 sends, to the 3GPP access network, the first N2 session management information received from the SMF 1. The 3GPP access network sends second N2 session management information to the AMF 1. The second N2 session management information carries information about the N3 tunnel address of the 3GPP access network in the PDU session 2. The AMF 1 sends the second N2 session management information to the SMF 1. In this embodiment of this application, the information about the N3 tunnel address of the 3GPP access network in the PDU session 2 is also referred to as an N3 tunnel address of the 3GPP access network on the 3GPP side in the multi-access connectivity, or a downlink N3 tunnel address of the PDU session 2.

The SMF 1 sends an N4 session modification message to the UPF 1, where the N4 session modification message carries the N3 tunnel address of the 3GPP access network in the PDU session 2. The UPF 1 sends an N4 session modification response message to the SMF 1.

In this embodiment of this application, the tunnel address information may include a tunnel endpoint identifier and an IP address.

In S606 to S609, the session management network element establishes, for the terminal device, a second connection associated with the second access technology. A data network of the second connection is the same as a data network of the first connection that is of the terminal device and that is associated with the first access technology, an IP address allocated to the second connection is the same as an IP address allocated to the first connection, and a user plane network element of the first connection is the same as a user plane network element of the second connection.

The session management network element obtains a first tunnel endpoint identifier from the user plane network element. The first tunnel endpoint identifier is used as an uplink tunnel endpoint identifier of the second connection. The session management network element sends, by using the mobility management network element, the first tunnel endpoint identifier to an access network device using the second access technology. The access network device using the second access technology allocates a second tunnel endpoint identifier. The second tunnel endpoint identifier is used as a downlink tunnel endpoint identifier of the second connection. The access network device using the second access technology sends the second tunnel endpoint identifier to the session management network element by using the mobility management network element. The session management network element sends the second tunnel endpoint identifier to the user plane network element.

The session management network element generates a downlink routing rule according to the routing rule obtained in S607, where the routing rule indicates to steer a downlink data packet of the first connection/second connection by using the first access technology and the second access technology. As shown in S608, in a possible implementation, the session management network element may receive the routing rule from a policy control network element. In another possible implementation, the session management network element generates the routing rule. In this embodiment of this application, the routing rule is also the multi-access connectivity control policy. An uplink routing rule is also referred to as the uplink multi-access routing rule. The downlink routing rule is also referred to as the downlink multi-access routing rule.

The session management network element sends the downlink routing rule to the user plane network element, where the downlink routing rule indicates to steer a downlink data packet of the first connection/second connection by using the first access technology and the second access technology. The session management network element generates the uplink routing rule according to the routing rule, where the uplink routing rule indicates to steer an uplink data packet of the first connection/second connection by using the first access technology and the second access technology. The session management network element sends the uplink routing rule to the terminal device.

In S609, the session management network element sends a connection identifier of the second connection and the IP address of the second connection to the terminal device by using the mobility management network element. The IP address of the second connection is the same as the IP address of the first connection. The terminal device uses the IP address as the IP address of the second connection.

In S609, the session management network element establishes association information between the first connection and the second connection, that is, associates the first connection with the second connection. In a possible implementation, the session management network element stores a connection identifier of the first connection in a context of the second connection. Optionally, the session management network element marks that the connection identifier of the first connection corresponds to an access network using the first access technology, and marks that the connection identifier of the second connection corresponds to the access network using the second access technology.

In another possible implementation, the session management network element stores the connection identifier of the second connection in a context of the first connection. Optionally, the session management network element marks that the connection identifier of the first connection corresponds to the access network using the second access technology, and marks that the second connection corresponds to the access network using the first access technology.

The session management network element may modify quality of service QoS policies of the first connection and the second connection based on the association information between the first connection and the second connection.

S610: The AMF 1 sends a PDU session 2 establishment success response to the N5CW device.

For example, the AMF 1 sends a second NAS message to the N5CW device. The second NAS message indicates that the PDU session 2 is successfully established.

For example, the second NAS message includes the PDU session establishment response received in S609. The AMF 1 associates the PDU session 1 with the PDU session 2.

In a possible implementation, the AMF 1 stores the PDU session ID of the PDU session 1 in the context of the PDU session 2. Optionally, the AMF 1 marks that the PDU session ID of the PDU session 1 corresponds to the non-3GPP access network, and marks that the PDU session ID 2 corresponds to the 3GPP access network.

In another possible implementation, the AMF 1 stores the PDU session ID 2 in a context of the PDU session 1. Optionally, the AMF 1 marks that the PDU session ID of the PDU session 1 corresponds to the non-3GPP access network, and marks that the PDU session ID 2 corresponds to the 3GPP access network.

In a possible implementation, the PDU session establishment response in S610 and the uplink tunnel address of the UPF 1 sent by the AMF 1 to the 3GPP access network in S609 may be simultaneously sent by the AMF 1 to the 3GPP access network, and sent by the 3GPP access network to the N5CW device.

After receiving the PDU session establishment response, the N5CW device sends a data packet of the multi-access PDU session by using the IP address in the PDU session establishment response. The N5CW device chooses, according to the uplink multi-access routing rule in the PDU session establishment response, to send the data packet of the multi-access PDU session by using the 3GPP access network or the non-3GPP access network.

In S609, the SMF 1 sends the downlink multi-access routing rule to the UPF 1. The UPF 1 steers, switches, and splits a downlink data packet between the 3GPP access network and the non-3GPP access network by using the downlink multi-access routing rule.

For example, when the UPF 1 receives a downlink data packet of the PDU session 2, if the UPF 1 determines, according to the downlink multi-access routing rule, to send the downlink data packet to the N5CW device by using the 3GPP access network, the UPF 1 encapsulates the downlink data packet by using the downlink tunnel address of the 3GPP access network in the PDU session 2, and then sends the downlink data packet to the 3GPP access network.

For example, when the UPF 1 receives a downlink data packet of the PDU session 2, if the UPF 1 determines, according to the downlink multi-access routing rule, to send the downlink data packet to the N5CW device by using the non-3GPP access network, the UPF 1 encapsulates the downlink data packet by using a downlink tunnel address of the non-3GPP access network in the PDU session 1, and then sends the downlink data packet to the non-3GPP access network.

In S604 to S610, the core network establishes, for the terminal device, the second connection associated with the second access technology. The data network of the second connection is the same as the data network of the first connection that is of the terminal device and that is associated with the first access technology, the IP address allocated to the second connection is the same as the IP address allocated to the first connection, and the user plane network element of the first connection is the same as the user plane network element of the second connection.

The core network configures the downlink routing rule for the user plane network element, where the downlink routing rule indicates to steer a downlink data packet of the first connection/second connection by using the first access technology and the second access technology. The core network configures the uplink routing rule for the terminal device, where the uplink routing rule indicates to steer an uplink data packet of the first connection/second connection by using the first access technology and the second access technology.

In S604, the mobility management network element selects the session management network element serving the first connection.

In S605, the mobility management network element requests the session management network element to establish, for the terminal device, the second connection associated with the second access technology. The mobility management network element sends the connection identifier of the first connection to the session management network element, and the session management network element obtains the data network, the IP address, and the user plane network element of the first connection based on the connection identifier. Further, the session management network element may obtain the policy control network element of the first connection based on the connection identifier. In S606 to S609, the session management network element establishes, for the terminal device, the second connection associated with the second access technology, where the data network of the second connection is the same as the data network of the first connection, the IP address allocated to the second connection is the same as the IP address allocated to the first connection, and the user plane network element of the first connection is the same as the user plane network element of the second connection.

In S601 to S610, the N5CW device requests, by using the 3GPP access network, to establish the PDU session 2 associated with the 3GPP access technology. The core network determines the PDU session 1 of the N5CW device on the non-3GPP side, and establishes the PDU session 2 by using the session parameter of the PDU session, so that the N5CW device can send an uplink data packet of the PDU session 1/PDU session 2 by using the PDU session 1 and the PDU session 2, and the UPF can send a downlink data packet of the PDU session 1/PDU session 2 by using the PDU session 1 and the PDU session 2. Therefore, transmission bandwidth is increased for the N5CW device and service continuity during handover is improved.

In S601 to S610, the terminal device requests to establish the second connection by using the second access technology. The core network determines, by using the terminal identifier of the terminal device, the first connection that is of the terminal device and that is associated with the first access technology, and establishes the second connection associated with the second access technology, so that the terminal device can send an uplink data packet of the first connection/the second connection by using the first connection and the second connection. The user plane network element can send a downlink data packet of the first connection/the second connection by using the first connection and the second connection. Therefore, transmission bandwidth is increased for the terminal device, and service continuity during handover is improved. In this embodiment of this application, it may be considered that the multi-access connectivity includes the first connection and the second connection. A data packet of the first connection may also be referred to as a data packet of the second connection, a data packet of the multi-access connectivity, or a data packet of the first connection/second connection. It should be noted that, in actual deployment, the mobility management network element and the session management network element may be separately located or co-located. When the mobility management network element and the session management network element are co-located, actions performed by the mobility management network element and the session management network element are performed by a same network element, and a message exchanged between the mobility management network element and the session management network element is an internal operation of the network element.

In actual deployment, the session management network element and the user plane network element may be separately located or co-located. When the session management network element and the user plane network element are co-located, actions performed by the session management network element and the user plane network element are performed by a same network element, and a message exchanged between the session management network element and the user plane network element is an internal operation of the network element.

With reference to the architecture shown in FIG. 4, the following describes another multi-access connectivity establishment method provided in an embodiment of this application. The method may be used to establish multi-access connectivity for a terminal device that does not support exchanging control plane signaling with a core network by using a first access technology. The terminal device requests, by using an access network using a second access technology, to establish the multi-access connectivity. The following uses an example in which the first access technology is a non-3GPP access technology, the second access technology is a 3GPP access technology, the terminal device is an N5CW terminal device, a connection of the terminal device is a PDU session of the terminal device, and a connection identifier is a PDU session ID for description. In this embodiment of this application, a terminal address associated with the non-3GPP access technology is also referred to as a PDU session on a non-3GPP side, or a PDU session established by using a non-3GPP access network, or a PDU session established on the non-3GPP side. The control plane signaling may be a NAS message or NAS signaling. It should be noted that the method provided in this embodiment of this application may further be used in a scenario in which both the first access technology and the second access technology are 3GPP access technologies, or both are non-3GPP access technologies. The method provided in this embodiment of this application may be used to establish multi-access connectivity for a terminal device that supports exchanging control plane signaling with a core network in both the access technologies.

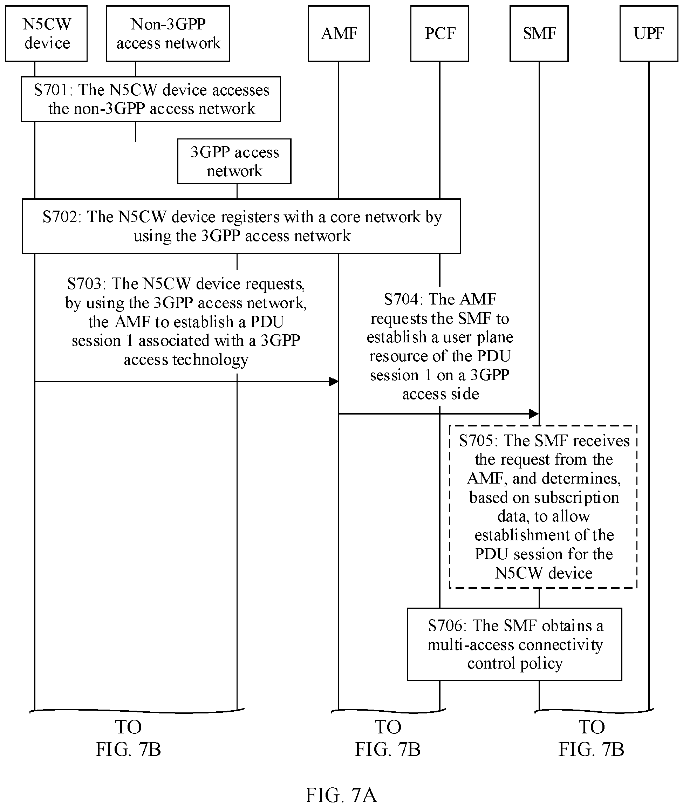

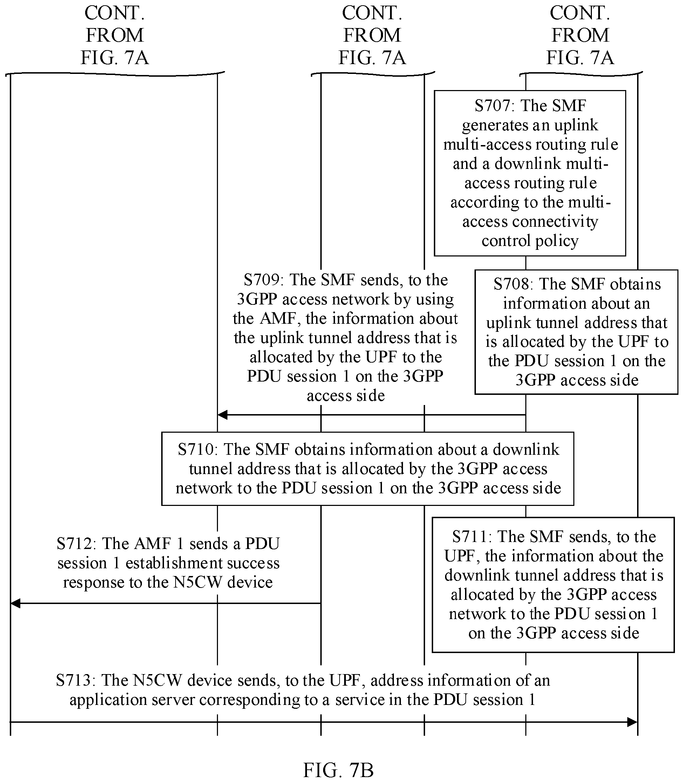

As shown in FIG. 7A and FIG. 7B, the method includes the following steps.

S701: The N5CW device accesses the non-3GPP access network.

In S701, the N5CW device obtains an IP address allocated by the non-3GPP access network. The IP address is referred to as IP 1 below. In this embodiment of this application, the IP address allocated by the non-3GPP access network is also referred to as an address associated with the non-3GPP access network.

For example, the N5CW device obtains, by using the dynamic host configuration protocol (Dynamic Host Configuration Protocol, DHCP), the IP address allocated by the non-3GPP access network.

S702: The N5CW device registers with a core network by using a 3GPP access network.

In S702, the N5CW device establishes a NAS connection to an AMF by using the 3GPP access network.

S703: The N5CW device requests, by using the 3GPP access network, the AMF to establish a PDU session 1 associated with the 3GPP access technology.

For example, the N5CW device sends, to the AMF by using the NAS connection established in S702, a first NAS message requesting to establish the PDU session 1. By using the first NAS message, the network obtains an IP address that is used by the N5CW device to communicate with the core network of the PDU session 1 by using the non-3GPP access network.

In a possible implementation of the first NAS message, the first NAS message includes the IP 1. The IP 1 is an IP address that is used by the N5CW device to communicate with the core network of the PDU session 1 by using the non-3GPP access network. In other words, the network needs to use the IP 1 as a destination address carried when a data packet of the PDU session 1 is sent to the terminal device by using the non-3GPP access technology.

Optionally, the AMF may learn, by using the first NAS message, that the IP 1 of the N5CW device is used as the destination address carried when the data packet of the PDU session 1 is sent to the terminal device by using the non-3GPP access technology.

In an implementation of the first NAS message, the first NAS message includes a first indication, and the first indication indicates to use the IP 1 of the N5CW device as the destination address carried when the data packet of the PDU session 1 is sent to the terminal device by using the non-3GPP access technology.

For example, the first indication may be implemented in the following manner:
(1) the first indication may be an N5CW device indication, indicating that the current terminal is an N5CW device;
(2) the first indication may be a terminal identifier of the N5CW device; or
(3) the first indication may be an indication indicating that the non-3GPP side does not support a NAS message, indicating that the current terminal does not support non-3GPP sending of the NAS message.

For example, the first NAS message may further include a multi-access PDU request indication, and the multi-access PDU request indication indicates to request to establish a multi-access PDU session.

For example, the first NAS message may further include a PDU session establishment request to be sent to an SMF. The PDU session establishment request to be sent to the SMF requests the SMF to use the IP 1 of the N5CW device as the destination address carried when a data packet of the PDU session is sent to the terminal device by using the non-3GPP access technology. For example, the PDU session establishment request to be sent to the SMF may include the IP 1. The SMF sends the IP 1 to a UPF, and the UPF may learn of the IP address that is used by the N5CW device to communicate with the UPF by using the non-3GPP access network. The UPF needs to use the IP 1 of the N5CW device as the destination address carried when the data packet of the PDU session is sent to the terminal device by using the non-3GPP access technology. Optionally, the PDU session establishment request to be sent to the SMF may include a first indication. The SMF may learn, by using the first indication, that the IP 1 of the N5CW device is used as the destination address carried when the data packet of the PDU session is sent to the terminal device by using the non-3GPP access technology.

In S703, the terminal device requests to establish a first connection associated with the second access technology, and sends, to the core network, a terminal address associated with the first access technology, where the terminal address is a destination address carried when a data packet of the first connection is sent to the terminal device by using the second access technology.

S704: The AMF requests the SMF to establish a user plane resource of the PDU session 1 on a 3GPP side.

For example, the AMF sends a request message to the SMF, where the request message requests to establish the user plane resource of the PDU session 1 on the 3GPP side.

Optionally, the request message further includes a multi-access PDU request indication. The SMF may learn, by using the multi-access PDU request indication, that multi-access connectivity needs to be established.

Optionally, the SMF may learn, by using the request message, that the IP 1 of the N5CW device is used as the destination address carried when the data packet of the PDU session is sent to the terminal device by using the non-3GPP access technology.

In a possible implementation of the request message, the request message further includes a PDU session establishment request to be sent to the SMF. By using the PDU session establishment request sent to the SMF, the SMF may learn that the IP 1 of the N5CW device is used as the destination address carried when the data packet of the PDU session is sent to the terminal device by using the non-3GPP access technology.

In another possible implementation of the request message, the request message may include a second indication. The second indication indicates that the IP 1 of the N5CW device is used as the destination address carried when the data packet of the PDU session is sent to the terminal device by using the non-3GPP access technology. For example, the second indication may be implemented in the following manner:
(1) the second indication may be an N5CW device indication, indicating that the current terminal is an N5CW device;
(2) the second indication may be the terminal identifier of the N5CW device; or
(3) the second indication may be an indication indicating that the non-3GPP side does not support a NAS message, indicating that the current terminal does not support non-3GPP sending of the NAS message.

Optionally, the request message may be an N11 message.

For example, the N11 message may be a session establishment request message.

In S704, a mobility management network element sends, to the session management network element, information about the terminal address received in S703. Optionally, the mobility management network element sends second information to the session management network element, where the second information indicates that the terminal address is used as the destination address carried when the data packet of the first connection is sent to the terminal device by using the second access technology. The second information may be implemented by using the second indication in S704.

S705: The SMF receives the request from the AMF, and determines, based on subscription data, to allow establishment of the PDU session 1 for the N5CW device.

S705 is optional.

S706: The SMF obtains a multi-access connectivity control policy.

For S706, refer to the descriptions of S507.

S707: The SMF generates an uplink multi-access routing rule and a downlink multi-access routing rule according to the multi-access connectivity control policy.

For S707, refer to the descriptions of S508.

S708: The SMF obtains information about an uplink tunnel address that is allocated by the UPF to the PDU session 1 on the 3GPP side.

For example, the SMF sends an N4 session modification request message to the UPF. The UPF sends an N4 session modification response message to the SMF. The N4 session modification response message includes an N3 tunnel address allocated by the UPF to the PDU session 1 on the 3GPP side.

Optionally, an N4 session establishment request message includes the downlink multi-access routing rule, the IP 1, and IP 2.

The IP 2 is an IP address allocated by the SMF to the PDU session 1.

The IP 1 indicates the IP address that is used by the N5CW device to communicate with the UPF of the PDU session 1 by using the non-3GPP access network.

Optionally, the N4 session establishment request message includes a link-specific IP (link-specific IP) indication. Based on the link-specific IP indication, the UPF uses the IP 1 as the IP address that is used by the N5CW device to communicate with the UPF by using the non-3GPP access network.

Optionally, the N4 session modification response message includes a UPF proxy IP address. The UPF proxy IP address is an IP address that is used by the UPF to communicate with the N5CW device by using the non-3GPP access network. The SMF sends the UPF proxy IP address to the N5CW device.

Optionally, the N4 session modification response message includes IP 3 that is allocated to the N5CW device and that is used to communicate with the UPF on the 3GPP side.

Optionally, the N4 session modification response message includes a UPF proxy port number. The UPF proxy port number is a port number that is used by the UPF to communicate with the N5CW device by using the non-3GPP access network. The SMF sends the UPF proxy port number to the N5CW device.

Optionally, the SMF selects a UPF that can reach the IP of the N5CW device. For example, the SMF selects, based on the IP 1, the UPF that can reach the IP of the N5CW device.

In S708, the session management network element sends, to a user plane network element of the first connection, information about the address that is of the terminal device, that is associated with the first access technology, and that is received in S704.

S709: The SMF sends, to the 3GPP access network by using the AMF, the information about the uplink tunnel address that is allocated by the UPF to the PDU session 1 on the 3GPP side.

For example, the SMF sends an N11 message to the AMF. The N11 message is used to send, to the 3GPP access network by using the AMF, the information about the uplink tunnel address that is allocated by the UPF to the PDU session 1 on the 3GPP side.

The N11 message includes information about the N3 tunnel address of the UPF on the 3GPP side in multi-access PDU session. For example, the information about the N3 tunnel address of the UPF on the 3GPP side may be carried in first N2 session management information in the N11 message.

For example, the AMF sends the information about the N3 tunnel address of the UPF on the 3GPP side to the 3GPP access network. For example, the information about the N3 tunnel address of the UPF on the 3GPP side may be carried in the first N2 session management information.

Optionally, the N11 message includes a PDU session establishment response. The PDU session establishment response indicates, to the N5CW device, that the PDU session 1 is successfully established.

Optionally, the PDU session establishment response includes the uplink multi-access routing rule, the IP 2, and the UPF proxy IP address that is obtained in S708. Optionally, the PDU session establishment response further includes the UPF proxy port number obtained in S708. Optionally, the PDU session establishment response further includes the IP 3 obtained in S708. The N5CW device steers, switches, and splits an uplink data packet between the 3GPP access network and the non-3GPP access network according to the uplink multi-access routing rule. When sending the data packet of the PDU session 1 by using the 3GPP access network, the N5CW device uses the IP 2 as a source address of the data packet. When sending the data packet of the PDU session 1 by using the non-3GPP access network, the N5CW device uses the UPF proxy IP address as a destination address of the data packet.

The SMF stores information indicating to perform 3GPP receiving and sending of a NAS message of the PDU session 1. In a possible implementation, the SMF may store, based on information about the second indication in S704, information indicating that the NAS message of the PDU session 1 is to be sent on the 3GPP side.

The N11 message may be a session establishment response message.

S710: The SMF obtains information about a downlink tunnel address allocated by the 3GPP access network to the PDU session 1 on the 3GPP side.

For example, the 3GPP access network sends, to the AMF, information about an N3 tunnel address allocated by the 3GPP access network on the 3GPP side. For example, the information about the N3 tunnel address may be carried in second N2 session management information.

For example, the AMF sends, to the SMF, the information about the N3 tunnel address allocated by the 3GPP access network on the 3GPP side. For example, the information about the N3 tunnel address may be carried in the second N2 session management information.

S711: The SMF sends, to the UPF, the information about the downlink tunnel address allocated by the 3GPP access network to the PDU session 1 on the 3GPP side.

In S708 to S711, the SMF establishes the user plane resource of the PDU session 1 on the 3GPP side.

S712: The AMF sends a PDU session 1 establishment success response to the N5CW device.

For example, the AMF sends a second NAS message to the N5CW device. The second NAS message indicates that the PDU session 1 is successfully established.

Optionally, the second NAS message includes the PDU session establishment response received in S709, indicating that the PDU session 1 is successfully established.

In a possible implementation, the PDU session 1 establishment success response in S712 and the uplink tunnel address of the UPF sent by the AMF to the 3GPP access network in S709 may be simultaneously sent by the AMF to the 3GPP access network, and sent by the 3GPP access network to the N5CW device.

The N5CW device chooses, according to the multi-access routing rule in the PDU session establishment response, to send the uplink data packet of the PDU session 1 by using the 3GPP access network or the non-3GPP access network.

For example, if determining, according to the multi-access routing rule, that an uplink data packet needs to be sent from the 3GPP access network, the N5CW device uses the IP 2 in the PDU session establishment response as a source address of the data packet, and sends the data packet by using the 3GPP access network. If determining, according to the multi-access routing rule, that an uplink data packet needs to be sent from the non-3GPP access network, the N5CW device uses the IP 1 obtained in S701 as a source address of the data packet, uses the obtained UPF proxy IP address as a destination address of the data packet, and sends the data packet by using the non-3GPP access network.

Optionally, if the IP 3 is allocated in S708, and if determining, according to the multi-access routing rule, that an uplink data packet needs to be sent from the 3GPP access network, the N5CW device uses the IP 3 in the PDU session establishment response as a source address of the uplink data packet, and sends the uplink data packet by using the 3GPP access network.

Optionally, the N5CW device further uses the obtained UPF proxy port number as a destination port number of the data packet, and sends the data packet by using the non-3GPP access network.

In S703 to S712, the core network establishes, for the terminal device, the first connection associated with the second access technology, receives, from the terminal device, a terminal address associated with the second access technology, and uses the terminal address as the destination address carried when the data packet of the first connection is sent to the terminal device by using the second access technology.

Optionally, the core network sends, to the terminal device, a network element address of the user plane network element serving the first connection, where the network element address is the destination address carried in the data packet that is of the first connection and that is sent by the terminal device by using the second access technology.

Optionally, the terminal device obtains an uplink routing rule, where the uplink routing rule indicates to steer an uplink data packet of the first connection/a second connection by using the first access technology and the second access technology. When the uplink routing rule indicates that the second data packet is sent by using the second access technology, the terminal device sets a destination address of the second data packet to the network element address, and sends the second data packet by using the access network using the second access technology.

S713: The N5CW device sends, to the UPF, address information of an application server corresponding to a service in the PDU session 1.

For example, for each service carried in the PDU session 1, the N5CW device establishes an IP/TCP connection or an IPIUDP connection to the application server corresponding to the service. Specifically, the N5CW device establishes an IP/TCP connection 1 or an IP/UDP connection 1 to the UPF by using the 3GPP access network, the N5CW device establishes an IP/TCP connection 2 or an IP/UDP connection 2 to the UPF by using the non-3GPP access network, and the UPF establishes, to the application server, an IP/TCP connection 3 corresponding to the IP/TCP connection 1 and the IP/TCP connection 2, or an IP/UDP connection 3 corresponding to the IPIUDP connection 1 and the IP/UDP connection 2. For each IP/TCP connection or IPIUDP connection, the N5CW device sends an IP address of the corresponding application server to the UPF. The UPF associates the received IP address of the application server with the IP/TCP connection or the IPIUDP connection. Optionally, the N5CW device sends destination port number information of the application server to the UPF.

For example, the N5CW device sends the IP address of the application server to the UPF according to the SOCKv4, SOCKv5, or TCP convert protocol. Optionally, the N5CW device sends the destination port number information of the application server to the UPF according to the SOCKv4, the SOCKv5, or the TCP convert protocol.

When receiving an uplink data packet of the PDU session 1 sent by using non-3GPP access network, the UPF replaces a destination address of the uplink data packet with the IP address of the application server.

For example, when the UPF receives an uplink data packet of the PDU session 1, the UPF replaces a source address of the data packet with the IP 2, replaces a destination address of the data packet with the IP address of the application server, and then forwards the data packet. Optionally, the UPF determines, based on an IP/TCP connection or an IP/UDP connection to which the data packet belongs, that the destination address needs to be replaced with the address of the application server. For example, the UPF determines, based on a source port number of the data packet, the IP/TCP connection or the IP/UDP connection to which the data packet belongs. The UPF may obtain a port number of the N5CW device on the IP/TCP connection or the IPIUDP connection when the N5CW device establishes the IP/TCP connection or the IP/UDP connection to the UPF. When receiving an uplink data packet of the PDU session 1, if a source port number is a port number of the N5CW device on the IP/TCP connection or the IP/UDP connection, the UPF replaces a source address of the data packet with the IP 2, replaces a destination address of the data packet with the IP address of the application server, and then forwards the data packet.

In a possible implementation, when receiving an uplink data packet whose source address is the IP 1, the UPF replaces the source address of the uplink data packet with the IP 2.

In another possible implementation, when receiving an uplink data packet whose source address is the IP 3, the UPF replaces the source address of the uplink data packet with the IP 2.

In another possible implementation, the UPF further replaces a source port number of the data packet with a port number of the UPF on an IP/TCP connection or an IP/UDP connection to which the data packet belongs. The UPF determines, based on the IP/TCP connection or the IP/UDP connection to which the data packet belongs, that a destination address needs to be replaced with the address of the application server. For example, the UPF determines, based on the source port number of the data packet, the IP/TCP connection or the IP/UDP connection to which the data packet belongs. The UPF may obtain a port number of the N5CW device on the IP/TCP connection or the IP/UDP connection when the N5CW device establishes the IP/TCP connection or the IPIUDP connection to the UPF. When receiving an uplink data packet of the PDU session 1, if a source port number is a port number of the N5CW device on the IP/TCP connection or the IP/UDP connection, the UPF replaces a destination address of the data packet with the IP address of the application server, and then forwards the data packet.

When the UPF receives a downlink data packet of the PDU session 1, namely, a downlink data packet whose destination address is the IP 2, if the UPF determines, according to the downlink multi-access routing rule, to send the downlink data packet to the N5CW device by using the non-3GPP access network, the UPF replaces the destination address in the data packet with the IP 1, replaces a source address in the data packet with the UPF proxy IP address, and then forwards the data packet by using the non-3GPP access network.

Optionally, the UPF further replaces a destination port number in the data packet with the port number of the N5CW device on the IP/TCP connection or the IPIUDP connection, and replaces a source port number with the port number of the UPF on the IP/TCP connection or the IP/UDP connection.

For example, when the UPF receives a downlink data packet of the PDU session 1, namely, a downlink data packet whose destination address is the IP 2, if the UPF determines, according to the downlink multi-access routing rule, to send the downlink data packet to the N5CW device by using the 3GPP access network, the UPF sends the downlink data packet to the N5CW device by using the 3GPP access network.

In a possible implementation, the UPF replaces the destination address of the data packet with the IP 3, encapsulates the downlink data packet by using the information that is about the downlink tunnel address of the 3GPP access network and that is received in S711, and then sends the downlink data packet to the 3GPP access network.

Optionally, the UPF further replaces a source address of the downlink data packet with the UPF proxy IP address, and the UPF replaces the source address of the downlink data packet with an IP address of the UPF on an IP/TCP connection or an IPIUDP connection to which the data packet belongs. For example, the IP address of the UPF on the IP/TCP connection or the IP/UDP connection to which the data packet belongs is the UPF proxy IP address.

In another possible implementation, the UPF does not need to replace the source address and the destination address.

In another possible implementation, the UPF further replaces a source port number in the downlink data packet with a port number of the UPF on the IP/TCP connection or the IP/UDP connection. For example, a port number of the UPF on the IP/TCP connection or the IPIUDP connection is the UPF proxy port number. In S713, the user plane network element receives a first data packet of the first connection, changes a destination address of the first data packet to the terminal address, and sends the first data packet to the terminal device. When a downlink routing rule received in S708 indicates that the first data packet is to be sent by using the first access technology, the user plane network element changes the destination address of the first data packet to the information about the terminal address, and sends the first data packet to the terminal device. The downlink routing rule indicates to steer a downlink data packet of the first connection by using the first access technology and the second access technology.

In S713, the user plane network element receives a second data packet whose destination address is the network element address, changes the destination address of the data packet to the address of the application server, and sends the second data packet to the application server. The user plane network element receives the address of the application server from the terminal device.

In S701 to S713, the N5CW device requests, by using the 3GPP access network, to establish the PDU session 1 associated with the 3GPP access technology, and the N5CW device sends, to the network, the IP address that is of the N5CW device and that is associated with the non-3GPP access technology. The core network establishes the user plane resource of the PDU session 1 on the 3GPP side, so that the N5CW device can send an uplink data packet of the PDU session 1 by using the 3GPP and non-3GPP access technologies, and the UPF can send a downlink data packet of the PDU session 1 by using the 3GPP and non-3GPP access technologies, to increase transmission bandwidth for the N5CW device and improve service continuity during handover.

In S701 to S713, the terminal device requests to establish the first connection by using the second access technology, and sends, to the network, the terminal address that is of the terminal device and that is associated with the first access technology. The core network establishes the user plane resource of the first connection on a second access technology side, so that the terminal device can send an uplink data packet of the first connection by using the first access technology and the second access technology. The core network can send a downlink data packet of the first connection by using the first access technology and the second access technology, to increase transmission bandwidth for the terminal device and improve service continuity during handover. In this embodiment of this application, it may be considered that the multi-access connectivity includes the first connection and the connection between the terminal device and the access network using the second access technology. The data packet of the first connection may also be referred to as a data packet of the connection between the terminal device and the access network using the second access technology, or a data packet of the multi-access connectivity. It should be noted that, in actual deployment, the mobility management network element and the session management network element may be separately located or co-located. When the mobility management network element and the session management network element are co-located, actions performed by the mobility management network element and the session management network element are performed by a same network element, and a message exchanged between the mobility management network element and the session management network element is an internal operation of the network element.

In actual deployment, the session management network element and the user plane network element may be separately located or co-located. When the session management network element and the user plane network element are co-located, actions performed by the session management network element and the user plane network element are performed by a same network element, and a message exchanged between the session management network element and the user plane network element is an internal operation of the network element.

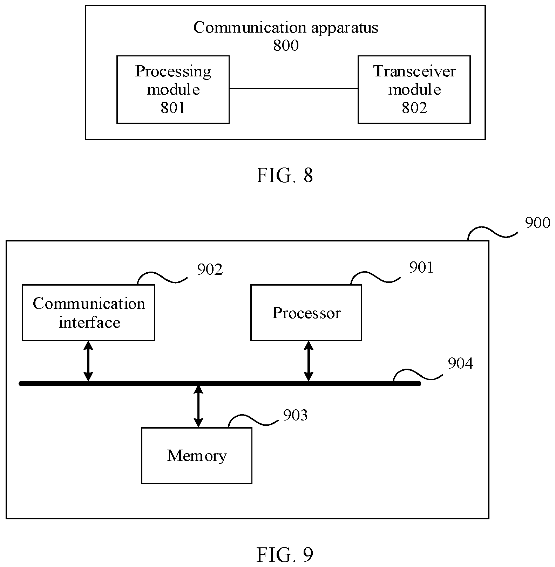

FIG. 8 is a schematic block diagram of a communication apparatus 800 according to an embodiment of this application.

The communication apparatus includes a processing module 801 and a transceiver module 802. The processing module 801 is used by the communication apparatus to implement data processing. The transceiver module 802 is configured to implement content exchange between the communication apparatus and another unit or network element. It should be understood that the processing module 801 in this embodiment of this application may be implemented by a processor or a processor-related circuit component (which is also referred to as a processing circuit), and the transceiver module 802 may be implemented by a transceiver or a transceiver-related circuit component.

For example, the communication apparatus 800 may be a communication apparatus device, or may be a chip used in the communication apparatus device or another combined device or component that has a function of the communication apparatus device.

For example, the communication apparatus 800 may be the AMF in FIG. 5A and FIG. 5B, FIG. 6A and FIG. 6B, or FIG. 7A and FIG. 7B.

The processing module 801 may be configured to perform the data processing operation performed by the AMF in the embodiment shown in FIG. 5A and FIG. 5B, FIG. 6A and FIG. 6B, or FIG. 7A and FIG. 7B, for example, S501, S502, S504, and S509; S601, S602, S604, and S609; S702 and S710; and/or configured to support another process of the technology described in this specification.

The transceiver module 802 may be configured to perform the sending and receiving operations performed by the AMF in the embodiments shown in FIG. 5A and FIG. 5B, FIG. 6A and FIG. 6B, and FIG. 7A and

FIG. 7B, for example, receiving and sending operations required in S503, S505, S510, S501, S502, and S509; receiving and sending operations required in S603, S605, S610, S601, S602, and S609; or receiving and sending operations required in S703, S704, S712, S702, and 5710; and/or configured to support another process of the technology described in this specification.

For example, the communication apparatus 800 may be the SMF in FIG. 5A and FIG. 5B, FIG. 6A and FIG. 6B, or FIG. 7A and FIG. 7B.

The processing module 801 may be configured to perform the data processing operation performed by the SMF in the embodiment shown in FIG. 5A and FIG. 5B, FIG. 6A and FIG. 6B, or FIG. 7A and FIG. 7B, for example, S501, S506, S507, S508, and S509; S601, S606, S607, S608, and S609; S705, S706, S707, S708, S710, and S711; and/or configured to support another process of the technology described in this specification.

The transceiver module 802 may be configured to perform the sending and receiving operations performed by the SMF in the embodiments shown in FIG. 5A and FIG. 5B, FIG. 6A and FIG. 6B, and FIG. 7A and FIG. 7B, for example, receiving and sending operations required in S505, S501, S506, S507, S508, and S509; receiving and sending operations required in S605, S601, S606, S607, S608, and S609; receiving and sending operations required in S704, S709, S705, S706, S708, S710, and S711; and/or configured to support another process of the technology described in this specification.

For example, the communication apparatus 800 may be the UPF in FIG. 7A and FIG. 7B.

The processing module 801 may be configured to perform the data processing operation performed by the UPF in the embodiment shown in FIG. 7A and FIG. 7B, for example, S708 and S711, and/or configured to support another process of the technology described in this specification.

The transceiver module 802 may be configured to perform the sending and receiving operations performed by the UPF in the embodiment shown in FIG. 7A and FIG. 7B, for example, receiving and sending operations required in S713, S708, and S711, and/or configured to support another process of the technology described in this specification.

For example, the communication apparatus 800 may be the NSCW device in FIG. 5A and FIG. 5B, FIG. 6A and FIG. 6B, or FIG. 7A and FIG. 7B.

The processing module 801 may be configured to perform the data processing operation performed by the NSCW device in the embodiment shown in FIG. 5A and FIG. 5B, FIG. 6A and FIG. 6B, or FIG. 7A and FIG. 7B, for example, S501 and 5502; S601 and S602; S701 and S702; and/or configured to support another process of the technology described in this specification.

The transceiver module 802 may be configured to perform the sending and receiving operations performed by the NSCW device in the embodiments shown in FIG. 5A and FIG. 5B, FIG. 6A and FIG. 6B, and FIG. 7A and FIG. 7B, for example, receiving and sending operations required in S503, S510, S501, and S502; receiving and sending operations required in S603, S610, S601, and S602; receiving and sending operations required in S703, S713, S714, S701, and S702; and/or configured to support another process of the technology described in this specification.

An embodiment of this application further provides a communication apparatus. Refer to FIG. 9. The communication apparatus includes a processor 901, a communication interface 902, and a memory 903. The processor 901, the communication interface 902, and the memory 903 may be connected to each other by using a bus 904. The bus 904 may be a peripheral component interconnect (peripheral component interconnect, PCI) bus, an extended industry standard architecture (extended industry standard architecture, EISA) bus, or the like. The bus 904 may be classified into an address bus, a data bus, a control bus, and the like. For ease of representation, only one thick line is used to represent the bus in FIG. 9, but this does not mean that there is only one bus or only one type of bus. The processor 901 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof. The memory 903 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache.

The communication apparatus shown in FIG. 9 may be the AMF in FIG. 5A and FIG. 5B, FIG. 6A and FIG. 6B, or FIG. 7A and FIG. 7B, and is configured to complete a corresponding function.

For example, the processor 901 is configured to implement a data processing operation of the communication apparatus, for example, S501, S502, S504, and S509; S601, S602, S604, and S609; S702 and S710; and/or configured to support another process of the technology described in this specification.

For example, the communication interface 902 is configured to implement receiving and sending operations of the communication apparatus, for example, receiving and sending operations required in S503, S505, S510, S501, S502, and S509; receiving and sending operations required in S603, S605, S610, S601, S602, and S609; or receiving and sending operations required in S703, S704, S712, S702, and S710; and/or configured to support another process of the technology described in this specification.

The communication apparatus shown in FIG. 9 may be the SMF in FIG. 5A and FIG. 5B, FIG. 6A and FIG. 6B, or FIG. 7A and FIG. 7B, and is configured to complete a corresponding function.

For example, the processor 901 is configured to implement a data processing operation of the communication apparatus, for example, S501, S506, S507, S508, and S509; S601, S606, S607, S608, and S609; S705, S706, S707, S708, S710, and 5711; and/or configured to support another process of the technology described in this specification.

For example, the communication interface 902 is configured to implement receiving and sending operations of the communication apparatus, for example, receiving and sending operations required in S505, S501, S506, S507, S508, and S509; receiving and sending operations required in S605, S601, S606, S607, S608, and S609; receiving and sending operations required in S704, S709, S705, S706, S708, S710, and S711; and/or configured to support another process of the technology described in this specification.

The communication apparatus shown in FIG. 9 may be the UPF in FIG. 7A and FIG. 7B, and is configured to complete a corresponding function.

For example, the processor 901 is configured to implement a data processing operation of the communication apparatus, for example, S708 and S711, and/or configured to support another process of the technology described in this specification.

For example, the communication interface 902 is configured to implement receiving and sending operations of the communication apparatus, for example, receiving and sending operations required in S713, S708, and S711, and/or configured to support another process of the technology described in this specification.

An embodiment of this application further provides a communication apparatus. The communication apparatus may be a terminal device or a circuit. The communication apparatus may be configured to perform an action performed by the NSCW device in the foregoing method embodiment.

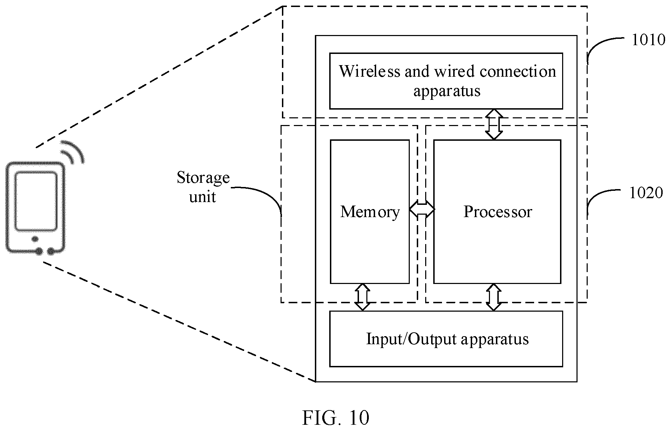

When the communication apparatus is an N5CW device, FIG. 10 is a simplified schematic diagram of a structure of a terminal device. As shown in FIG. 10, the terminal device includes a processor, a memory, a wireless and wired connection apparatus, and an input/output apparatus. The processor is mainly configured to: process a communication protocol and communication data, control the terminal device, execute a software program, process data of the software program, and the like. The memory is mainly configured to store the software program and data. The wireless and wired connection apparatus is mainly configured to convert and process a wireless signal, and includes a wireless connection apparatus of a 3GPP access technology and a wireless connection apparatus or a wired connection apparatus of a non-3GPP access technology. The input/output apparatus, for example, a touchscreen, a display, or a keyboard, is mainly configured to: receive data entered by a user and output data to the user. It should be noted that some types of terminal devices may have no input/output apparatus. Some types of terminal devices may not have a wired connection apparatus.

For ease of description, FIG. 10 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the wireless and wired connection apparatus may be considered as a transceiver unit of the terminal device (where the transceiver unit may be a functional unit, and the functional unit can implement a sending function and a receiving function; or the transceiver unit may include two functional units: a receiving unit that can implement a receiving function and a sending unit that can implement a sending function). The processor that has a processing function is considered as a processing unit of the terminal device. As shown in FIG. 10, the terminal device includes a transceiver unit 1010 and a processing unit 1020. The transceiver unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the transceiver unit 1010 may be considered as a receiving unit, and a component configured to implement a sending function in the transceiver unit 1010 may be considered as a sending unit. In other words, the transceiver unit 1010 includes the receiving unit and the sending unit. The transceiver unit sometimes may also be referred to as a transceiver machine, a transceiver, a transceiver circuit, or the like. The receiving unit may sometimes be referred to as a receiver machine, a receiver, a receiver circuit, or the like. The sending unit sometimes may also be referred to as a transmitter machine, a transmitter, a transmit circuit, or the like.

It should be understood that the transceiver unit 1010 is configured to perform a sending operation and a receiving operation of the terminal device in the foregoing method embodiments, and the processing unit 1020 is configured to perform an operation other than the receiving operation and the sending operation of the terminal device in the foregoing method embodiments.

For example, in an implementation, the processing unit 1020 may be configured to perform all operations, except the sending and receiving operations, performed by the NSCW terminal device in the embodiment shown in FIG. 5A and FIG. 5B, for example, S501 and S502, and/or s of the technology described in this specification. The transceiver unit 1010 may be configured to perform all the sending and receiving operations performed by the NSCW terminal device in the embodiment shown in FIG. 5A and FIG. 5B, for example, sending and receiving operations required in S503, S510, S501, and S502; and/or configured to support another process of the technology described in this specification.

In another implementation, the processing unit 1010 may be configured to perform all operations, except the sending and receiving operations, performed by the NSCW terminal device in the embodiment shown in FIG. 6A and FIG. 6B, for example, S601 and S602; and/or configured to support another process of the technology described in this specification. The transceiver unit 1010 may be configured to perform all the sending and receiving operations performed by the NSCW terminal device in the embodiment shown in FIG. 6A and FIG. 6B, for example, sending and receiving operations required in S603, S610, S601, and S602; and/or configured to support another process of the technology described in this specification.

In another implementation, the processing unit 1010 may be configured to perform all operations, except the sending and receiving operations, performed by the NSCW terminal device in the embodiment shown in FIG. 7A and FIG. 7B, for example, S701 and S702; and/or configured to support another process of the technology described in this specification. The transceiver unit 1010 may be configured to perform all the sending and receiving operations performed by the NSCW terminal device in the embodiment shown in FIG. 7A and FIG. 7B, for example, sending and receiving operations required in S703, S713, S714, S701, and S702; and/or configured to support another process of the technology described in this specification.

When the communication apparatus is a chip apparatus or circuit, the apparatus may include a transceiver machine and a processing machine. The transceiver machine may be an input/output circuit and/or a communication interface. The processing machine is an integrated processor, a microprocessor, or an integrated circuit. When the communication apparatus in this embodiment is a terminal device, refer to the terminal device shown in FIG. 8. The transceiver machine may refer to the transceiver module 802 in FIG. 8, and complete a corresponding function. The processor machine may refer to the processing module 801 in FIG. 8, and complete a corresponding function.

An embodiment of this application further provides a communication system, including one or more of the foregoing N5CW device, AMF, SMF, and UPF.

This application further provides a computer program product including instructions. When the computer program product runs on a computer, the computer is enabled to perform the steps performed by the AMF in FIG. 5A to FIG. 7B.

This application further provides a computer program product including instructions. When the computer program product runs on a computer, the computer is enabled to perform the steps performed by the SMF in FIG. 5A to FIG. 7B.

This application further provides a computer program product including instructions. When the computer program product runs on a computer, the computer is enabled to perform the steps performed by the UPF in FIG. 7B.

This application further provides a computer program product including instructions. When the computer program product runs on a computer, the computer is enabled to perform the steps performed by the NSCW device in FIG. 5A to FIG. 7B.

This application further provides a computer-readable storage medium. The computer-readable storage medium stores instructions. When the instructions are run on a computer, the computer is enabled to perform the steps performed by the AMF in FIG. 5A to FIG. 7B.

This application further provides a computer-readable storage medium. The computer-readable storage medium stores instructions. When the instructions are run on a computer, the computer is enabled to perform the steps performed by the SMF in FIG. 5A to FIG. 7B.

This application further provides a computer-readable storage medium. The computer-readable storage medium stores instructions. When the instructions are run on a computer, the computer is enabled to perform the steps performed by the UPF in FIG. 7A and FIG. 7B.

This application further provides a computer-readable storage medium. The computer-readable storage medium stores instructions. When the instructions are run on a computer, the computer is enabled to perform the steps performed by the NSCW device in FIG. 5A to FIG. 7A and FIG. 7B.

This application further provides a chip, including a processor. The processor is configured to read and run a computer program stored in a memory, to perform a corresponding operation and/or procedure performed by the AMF in the multi-access connectivity establishment method according to this application. Optionally, the chip further includes the memory, the memory is connected to the processor by using a circuit or a wire, and the processor is configured to read and execute the computer program in the memory. Further, optionally, the chip further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the SMF in the multi-access connectivity establishment method according to this application. Optionally, the chip further includes the memory, the memory is connected to the processor by using a circuit or a wire, and the processor is configured to read and execute the computer program in the memory. Further, optionally, the chip further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the UPF in the multi-access connectivity establishment method according to this application. Optionally, the chip further includes the memory, the memory is connected to the processor by using a circuit or a wire, and the processor is configured to read and execute the computer program in the memory. Further, optionally, the chip further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the NSCW device in the multi-access connectivity establishment method according to this application. Optionally, the chip further includes the memory, the memory is connected to the processor by using a circuit or a wire, and the processor is configured to read and execute the computer program in the memory. Further, optionally, the chip further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

The foregoing chip may alternatively be replaced with a chip system, and details are not described herein again.

In this application, the terms "include", "have" and any other variants mean to cover non-exclusive inclusion, for example, a process, method, system, product, or device that includes a series of steps or units is not necessarily limited to those steps or units that are clearly listed, but may include other steps or units not expressly listed or inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the term " and/or" in this application describes only an association relationship for describing associated objects and represents that three relationships may exist. For example, A and/or B may indicate the following three cases: Only A exists, both A and B exist, and only B exists. In addition, the character "/" in this specification usually indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-access connectivity establishment method, comprising:
determining, based on a terminal identifier of a terminal device, a first connection that is of the terminal device and that is associated with a first access technology; and
establishing a user plane resource associated with a second access technology for the first connection.

2. The method according to claim 1, wherein the establishing a user plane resource associated with a second access technology for the first connection comprises:
obtaining a second tunnel endpoint identifier of an access network element using the second access technology; and
sending the second tunnel endpoint identifier to a user plane network element of the first connection by using a session management network element serving the first connection.

3. The method according to claim 2, wherein the establishing a user plane resource associated with a second access technology for the first connection further comprises:
sending an uplink routing rule to the terminal device, wherein the uplink routing rule indicates to steer an uplink data packet of the first connection by using the first access technology and the second access technology.

4. The method according to claim 1, wherein the establishing a user plane resource associated with a second access technology for the first connection comprises:
receiving, from a session management network element serving the first connection, a first tunnel endpoint identifier of a user plane network element of the first connection; and
sending the first tunnel endpoint identifier to an access network element using the second access technology.

5. The method according to claim 4, wherein the establishing a user plane resource associated with a second access technology for the first connection further comprises:
sending a first message to the session management network element serving the first connection, wherein the first message enables the session management network element to send a downlink routing rule to the user plane network element, and the downlink routing rule indicates to steer a downlink data packet of the first connection by using the first access technology and the second access technology.

6. The method according to any one of claims 2 to 5, wherein the method further comprises:
sending a second indication to the session management network element, wherein the second indication indicates the session management network element to send a non-access stratum NAS message to the terminal device by using an access network using the second access technology.

7. The method according to claims 1 to 6, wherein the method further comprises:
receiving first information from the terminal device; and
the determining, based on a terminal identifier of a terminal device, a first connection that is of the terminal device and that is associated with a first access technology comprises:
determining the first connection based on the terminal identifier in response to the first information.

8. The method according to claim 7, wherein the first information is the terminal identifier.

9. The method according to claim 7, wherein the first information is:
information indicating that the terminal device does not support a NAS on a first access technology side.

10. The method according to claim 9, wherein the method further comprises:
receiving the terminal identifier from the terminal device.

11. The method according to claim 10, wherein the receiving the terminal identifier from the terminal device and the receiving first information from the terminal device comprise:
receiving a protocol data unit PDU session establishment request message from the terminal device, wherein the PDU session establishment request message comprises the terminal identifier and the first information.

12. A multi-access connectivity establishment method, comprising:
sending first information to a core network, wherein the first information enables the core network to determine, based on a terminal identifier of a terminal device, a first connection that is of the terminal device and that is associated with a first access technology, and establishing, for the first connection, a user plane resource associated with a second access technology.

13. The method according to claim 12, wherein the first information comprises:
the terminal identifier.

14. The method according to claim 12, wherein the first information comprises:
information indicating that the terminal device does not support a non-access stratum NAS on a first access technology side.

15. The method according to claim 14, wherein the method further comprises:
sending the terminal identifier to the core network.

16. The method according to claim 15, wherein the sending the terminal identifier to the core network and the sending first information to a core network comprise:
sending a PDU session establishment request message to the core network, wherein the PDU session establishment request message comprises the terminal identifier and the first information.

17. The method according to any one of claims 12 to 16, wherein the method further comprises:
receiving an uplink routing rule from the core network, wherein the uplink routing rule indicates to steer an uplink data packet of the first connection by using the first access technology and the second access technology.

18. The method according to any one of claims 12 to 17, wherein the method further comprises:
receiving a connection identifier of the first connection from the core network.

19. A multi-access connectivity establishment method, comprising:
receiving a connection identifier of a first connection; and
establishing, based on the connection identifier, a second connection associated with a second access technology, wherein
a data network of the second connection is the same as a data network of the first connection, an IP address allocated to the second connection is the same as an IP address allocated to the first connection, and a user plane network element of the second connection is the same as a user plane network element of the first connection.

20. The method according to claim 19, wherein the establishing, based on the connection identifier, a second connection associated with a second access technology comprises:
determining the data network of the first connection, the IP address of the first connection, and the user plane network element of the first connection based on the connection identifier; and
establishing the second connection based on the data network of the first connection, the IP address of the first connection, and the user plane network element of the first connection.

21. The method according to claim 19 or 20, wherein the establishing, based on the connection identifier, a second connection associated with a second access technology comprises:
receiving a first tunnel endpoint identifier of the user plane network element from the user plane network element of the second connection;
sending the first tunnel endpoint identifier to an access network element using the second access technology;
obtaining a second tunnel endpoint identifier of the access network element using the second access technology; and
sending the second tunnel endpoint identifier to the user plane network element.

22. The method according to claim 21, wherein the establishing, based on the connection identifier, a second connection associated with a second access technology further comprises:
sending a downlink routing rule to the user plane network element, wherein the downlink routing rule indicates to steer a downlink data packet of the first connection/second connection by using the first access technology and the second access technology; and
sending an uplink routing rule to the terminal device, wherein the uplink routing rule indicates to steer an uplink data packet of the first connection/second connection by using the first access technology and the second access technology.

23. The method according to claim 22, wherein the method further comprises:
generating the downlink routing rule or the uplink routing rule according to a routing rule, wherein the routing rule indicates to steer a data packet of the first connection by using the first access technology and the second access technology.

24. The method according to claim 23, wherein the method further comprises:
receiving the routing rule from a policy control network element serving the first connection.

25. The method according to claims 19 to 24, wherein the method further comprises:
establishing association information of the first connection and the second connection.

26. The method according to claim 25, wherein the method further comprises:
modifying quality of service QoS policies of the first connection and the second connection based on the association information.

27. The method according to claims 19 to 26, wherein the method further comprises:
receiving a second indication, wherein the second indication indicates to send a non-access stratum NAS message to the terminal device by using an access network using the second access technology.

28. A communication apparatus, comprising a processor, wherein
the processor is configured to read a program from a memory and run the program, to implement the method according to any one of claims 1 to 11.

29. A communication apparatus, comprising a processor, wherein
the processor is configured to read a program from a memory and run the program, to implement the method according to any one of claims 12 to 18.

30. A communication apparatus, comprising a processor, wherein
the processor is configured to read a program from a memory and run the program, to implement the method according to any one of claims 19 to 27.

31. A computer-readable storage medium, wherein the computer-readable storage medium stores instructions; and when the instructions are run by a processor, a communication apparatus comprising the processor is enabled to perform the method according to any one of claims 1 to 11, claims 12 to 18, and claims 19 to 27.

32. A computer program product, comprising a computer program, wherein when the computer program is executed by a processor, a communication apparatus comprising the processor is enabled to perform the method according to any one of claims 1 to 11, claims 12 to 18, and claims 19 to 27.

33. A communication system, comprising:
a first communication apparatus, configured to perform the method according to any one of claims 1 to 11; and
a session management network element, configured to communicate with the communication apparatus.
